(19) Europäisches Patentamt / European Patent Office / Office européen des brevets

(11) **EP 4 203 230 B1**

(12) **EUROPEAN PATENT SPECIFICATION**

(45) Date of publication and mention
of the grant of the patent:
**05.11.2025 Bulletin 2025/45**

(21) Application number: **22798050.5**

(22) Date of filing: **08.08.2022**

(51) International Patent Classification (IPC):
*H02J 3/00* (2006.01)     *H02J 3/38* (2006.01)
*H02J 3/40* (2006.01)

(52) Cooperative Patent Classification (CPC):
**H02J 3/00125; H02J 3/381; H02J 3/40**

(86) International application number:
**PCT/CN2022/110791**

(87) International publication number:
**WO 2023/082733 (19.05.2023 Gazette 2023/20)**

(54) **METHOD AND APPARATUS FOR MONITORING SYNCHRONOUS SAFETY AND STABILITY OF A RENEWABLE ENERGY GRID-CONNECTED SYSTEM, AND COMPUTER-READABLE STORAGE MEDIUM**

VERFAHREN UND VORRICHTUNG ZUR ÜBERWACHUNG DER SICHERHEIT UND STABILITÄT DER SYNCHRONISIERUNG EINES MIT EINEM STROMNETZ VERBUNDENEN ERNEUERBAREN ENERGIESYSTEMS, SOWIE COMPUTERLESBARES SPEICHERMEDIUM

PROCÉDÉ ET APPAREIL POUR SURVEILLER LA SÉCURITÉ ET LA STABILITÉ DE SYNCHRONISATION D'UN SYSTÈME À ÉNERGIE RENOUVELABLE CONNECTÉ AU RÉSEAU ÉLECTRIQUE, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2021 CN 202111316625**

(43) Date of publication of application:
**28.06.2023 Bulletin 2023/26**

(73) Proprietor: **China Electric Power Research Institute**
**Beijing 100192 (CN)**

(72) Inventors:
• **SUN, Huadong**
**Beijing 100192 (CN)**
• **WANG, Yiming**
**Beijing 100192 (CN)**
• **XU, Shiyun**
**Beijing 100192 (CN)**
• **ZHAO, Bing**
**Beijing 100192 (CN)**
• **WANG, Shuyan**
**Beijing 100192 (CN)**
• **BI, Jingtian**
**Beijing 100192 (CN)**

(74) Representative: **White, Andrew John**
**Mathys & Squire**
**The Shard**
**32 London Bridge Street**
**London SE1 9SG (GB)**

(56) References cited:
**CN-A- 109 327 043     CN-A- 112 968 471**
**CN-A- 113 193 598     CN-A- 113 552 430**
**CN-A- 113 783 232**

• **HUANG LINBIN ET AL: "Transient Stability Analysis and Control Design of Droop-Controlled Voltage Source Converters Considering Current Limitation", IEEE TRANSACTIONS ON SMART GRID, IEEE, USA, vol. 10, no. 1, 1 January 2019 (2019-01-01), pages 578 - 591, XP011695064, ISSN: 1949-3053, [retrieved on 20181228], DOI: 10.1109/ TSG.2017.2749259**

**Description**

TECHNICAL FIELD

Embodiments of the application relate to the field of power control, and in particular to a method and apparatus for monitoring synchronous safety and stability of a renewable energy grid-connected system, a medium, an equipment and a program.

BACKGROUND

With proportions of wind power, photovoltaic power and other new energies installed in a power grid increasing, a proportion of power generated by new energies in total power generated by the power grid also increases, and renewable energy power will gradually become a main body of energy increment.

Compared with a traditional synchronous power supply, a renewable energy power supply with a power electronic converter as a grid-connected interface has apparent characteristics such as multi-time scale coupling, multi-control link interaction, nonlinear dynamics, low inertia, or the like. A synchronous stability problem of a power system caused by the renewable energy power supply under a weak grid condition has attracted wide attention of researchers at home and abroad. At present, research on synchronous stability of a power electronic type of a gird-connected interface equipment such as the renewable energy power supply, a flexible Alternating Current (AC) Transmission Systems (FACTS), or the like, mainly focuses on existence of an equilibrium point and change of kinetic energy of a virtual rotor in a transient process, to analyze synchronous stability of a grid-connected system for a renewable energy power generator.

In recent years, a security problem of a power system represented by overvoltage has become increasingly prominent. Short-term surplus of reactive power caused by uncoordinated control of a renewable energy power generator with reactive power control characteristics in a transient process is one of the main reasons for causing high proportion of overvoltage in a renewable energy power system. However, in the related art, research on synchronous stability analysis and control only starts from a synchronous operation capability of the renewable energy power generator itself, and does not consider constraints of safe and stable operation requirements of an AC system connected to the renewable energy power generator imposed on synchronous operation of the equipment, thus it is difficult to ensure safe and stable operation of the connected AC system. CN113552430A discloses a method for determining converter transient stability based on a critical index.

SUMMARY

In order to solve the technical problem that impact of overvoltage is not considered in assessment of synchronous safety and stability for a renewable energy grid-connected system in the related art, the embodiments of the application provide a method and apparatus for monitoring synchronous safety and stability of a renewable energy grid-connected system, a medium, an equipment and a program, here the renewable energy grid-connected system includes an AC power grid and a renewable energy power generator connected to the AC power grid based on a voltage source converter (VSC) and synchronously operating with the AC power grid through a phase-locked loop (PLL) in the VSC, the method includes the following operations.

A generator-side voltage of the renewable energy power generator, an AC bus voltage, a voltage of the AC power grid and a current input to the renewable energy power generator are acquired in response to failure of the renewable energy grid-connected system.

According to the generator-side voltage, a real-time relative phase-locked angle of the renewable energy grid-connected system is determined based on a pre-established control logic for the PLL.

According to the voltage of the AC power grid and the current input to the renewable energy power generator, a synchronous operable range of the renewable energy grid-connected system is determined based on a pre-established control logic for the generator-side voltage of the renewable energy power generator.

An overvoltage constraint of the renewable energy grid-connected system is determined according to the generator-side voltage and a preset fixed value for generator-side overvoltage protection, and the AC bus voltage and a preset limit value for AC bus overvoltage insulation.

A safety boundary of a relative phase-locked angle of the renewable energy grid-connected system based on the overvoltage constraint is determined according to the overvoltage constraint and the voltage of the AC power grid.

An operable range of the relative phase-locked angle of the renewable energy grid-connected system based on the overvoltage constraint is determined according to the synchronous operable range of the renewable energy grid-connected system and the safety boundary of the relative phase-locked angle of the renewable energy grid-connected system based on the overvoltage constraint.

Early-warning information of the synchronous safety and stability of the renewable energy grid-connected system is generated according to the real-time relative phase-locked angle and the operable range of the relative phase-locked angle.

An embodiment of the application provides an apparatus for monitoring synchronous safety and stability of a renewable energy grid-connected system, here the renewable energy grid-connected system includes an AC power grid and a renewable energy power generator connected to the AC power grid based on VSC and synchronously operating with the AC power grid through PLL in the VSC, the apparatus includes a data acquisition part, a first determination part, a second determination part, a dominant constraint part, a third determination part, a fourth determination part, and a safety early-warning part.

The data acquisition part is configured to acquire, in response to failure of the renewable energy grid-connected system, a generator-side voltage of the renewable energy power generator, an AC bus voltage, a voltage of the AC power grid and a current input to the renewable energy power generator.

The first determination part is configured to determine, according to the generator-side voltage, a real-time relative phase-locked angle of the renewable energy grid-connected system based on a pre-established control logic for the PLL.

The second determination part is configured to determine, according to the voltage of the AC power grid and the current input to the renewable energy power generator, a synchronous operable range of the renewable energy grid-connected system based on a pre-established control logic for the generator-side voltage of the renewable energy power generator.

The dominant constraint part is configured to determine an overvoltage constraint of the renewable energy grid-connected system according to the generator-side voltage and a preset fixed value for generator-side overvoltage protection, and the AC bus voltage and a preset limit value for AC bus overvoltage insulation.

The third determination part is configured to determine, according to the overvoltage constraint and the voltage of the AC power grid, a safety boundary of a relative phase-locked angle of the renewable energy grid-connected system based on the overvoltage constraint.

The fourth determination part is configured to determine, according to the synchronous operable range of the renewable energy grid-connected system and the safety boundary of the relative phase-locked angle of the renewable energy grid-connected system based on the overvoltage constraint, an operable range of the relative phase-locked angle of the renewable energy grid-connected system based on the overvoltage constraint.

The safety early-warning part is configured to generate, according to the real-time relative phase-locked angle and the operable range of the relative phase-locked angle, early-warning information of the synchronous safety and stability of the renewable energy grid-connected system.

An embodiment of the application provides a computer-readable storage medium, having stored thereon a computer program configured to perform the above method for monitoring synchronous safety and stability of a renewable energy grid-connected system.

An embodiment of the application provides an electronic equipment, including a processor and a memory storing executable instructions of the processor. The processor is configured to read the executable instructions from the memory and execute the executable instructions to implement the above method for monitoring synchronous safety and stability of a renewable energy grid-connected system.

An embodiment of the application provides a computer program, including computer-readable codes, a processor of an electronic equipment implements the above method for monitoring synchronous safety and stability of a renewable energy grid-connected system, when the computer-readable codes are run in the electronic equipment.

The embodiments of the application provide a method and apparatus for monitoring synchronous safety and stability of a renewable energy grid-connected system, a medium, an equipment and a program, the method includes the following operations. According to acquired parameters, a real-time relative phase-locked angle is calculated, a synchronous operable range of the renewable energy grid-connected system is determined, and a safety boundary of a relative phase-locked angle of the renewable energy grid-connected system based on an overvoltage constraint is determined. An operable range of the relative phase-locked angle of the renewable energy grid-connected system based on the overvoltage constraint is determined according to the synchronous operable range of the renewable energy grid-connected system and the safety boundary of the relative phase-locked angle of the renewable energy grid-connected system based on the overvoltage constraint. The synchronous safety and stability of the renewable energy grid-connected system is judged by judging whether the real-time phase-locked angle exists in the operable range of the relative phase-locked angle of the renewable energy grid-connected system based on the overvoltage constraint. The above method may reduce probability of occurrence of equipment safety problems such as off-grid risk of a renewable energy power generator caused by overvoltage or equipment insulation breakdown caused by overvoltage, and may reduce probability of occurrence of system linkage accidents that may be caused subsequently, and may fully ensure synchronous, safe and stable operation of the renewable energy grid-connected system.

Technical solutions provided by the embodiments of the application will be described in detail below with reference to the drawings and embodiments.

BRIEF DESCRIPTION OF THE DRAWINGS

The above and other purposes, features and advantages of the embodiments of the application will become more apparent by describing the embodiments of the application in more detail in combination with the drawings. The drawings are intended to provide further understanding of the embodiments of the application and constitute a part of the specification, and are intended to explain the embodiments of the application together with the embodiments of the application, rather than limiting the application. In the drawings, the same reference numeral generally represents the same component or operation.

FIG. 1 is a schematic flowchart of a method for monitoring synchronous safety and stability of a renewable energy grid-connected system according to an exemplary embodiment of the application.
FIG. 2 is a topological structural diagram of a renewable energy grid-connected system according to an exemplary embodiment of the application.
FIG. 3 is a curve diagram for simulating and verifying a synchronous operational range for a renewable energy grid-connected system according to an exemplary embodiment of the application.
FIG. 4 is a schematic diagram of an operable range of a relative phase-locked angle of a renewable energy grid-connected system based on overvoltage constraints according to an exemplary embodiment of the application.
FIG. 5 is a schematic structural diagram of an apparatus for monitoring synchronous safety and stability of a renewable energy grid-connected system according to an exemplary embodiment of the application.
FIG. 6 is a structural diagram of an electronic equipment according to an exemplary embodiment of the application.

DETAILED DESCRIPTION

Exemplary embodiments of the application will be described in detail below with reference to the drawings. It is apparent that the described embodiments are part of embodiments of the application, rather than all embodiments of the application, and it should be understood that the application is not limited by the exemplary embodiments described here.
It should be noted that relative arrangement, numeric expressions and numerical values of components and operations described in the embodiments do not limit the scope of the embodiments of the application, unless otherwise specified particularly.
It may be understood by those skilled in the art that terms "first", "second", or the like in the embodiments of the application are only intended to distinguish between different operations, equipments, modules, or the like, and do not represent any particular technical meaning or necessary logical orders among them.
It should also be understood that in the embodiments of the application, "multiple" may refer to two or more, and "at least one" may refer to one, two or more.
It should also be understood that any of components, data or structures mentioned in the embodiments of the application may generally be understood as one or more without being explicitly defined or contrary inspiration given in the context.
Furthermore, a term "and/or" in the embodiment of the application is merely an association relationship for describing associated objects and represents that three relationships may exist. For example, A and/or B may represent three conditions: i.e., independent existence of A, existence of both A and B, and independent existence of B. Furthermore, a character "/" in the embodiments of the application generally indicates that there is an "or" relationship between associated objects. It should also be understood that descriptions of the embodiments of the application focus on emphasis of differences among the embodiments and the same or similar contents among the embodiments may be referred by each other.
Moreover, it should be understood that for convenience of descriptions, a dimension of each part shown in the drawings is not drawn according to an actual proportional relationship thereof.
The following descriptions of at least one exemplary embodiment are only illustrative in fact, and never served as any limitation to the embodiments of the application and application or usage thereof. Technologies, methods and equipments known to those of ordinary skill in relevant fields may not be discussed in detail, however, the technologies, methods and equipments should be considered as a part of the specification where appropriate.
It should be noted that similar numerals and letters represent similar items in the following drawings, therefore, once an item is defined in a drawing, it is not required to be further discussed in subsequent drawings.
The embodiments of the application may be applied to an electronic equipment such as a terminal equipment, a computer system, a server, or the like, which may operate with many other general or special computing system environments or configurations. Examples of well-known terminal equipments, computing systems, environments and/or configurations suitable to be used with the electronic equipment such as a terminal equipment, a computer system, a server, or the like include, but are not limited to personal computer systems, server computer systems, thin clients, thick clients, handheld or laptop equipments, microprocessor-based systems, set-top boxes, programmable consumer electronics, networked personal computers, minicomputer systems, mainframe computer systems, and distributed cloud computing technology environments including any of the above systems, or the like.

The electronic equipment such as a terminal equipment, a computer system, a server, or the like may be described in a general context of computer system executable instructions (such as program modules) executed by the computer system. Generally, the program modules may include routines, programs, object programs, components, logics, data structures, or the like, which perform specific tasks or implement specific abstract data types. The computer system/server may be implemented in a distributed cloud computing environment in which tasks are performed by a remote processing equipment linked through a communication network. In the distributed cloud computing environment, the program modules may be located on a local or remote computing system storage medium including a storage equipment.

Exemplary Method

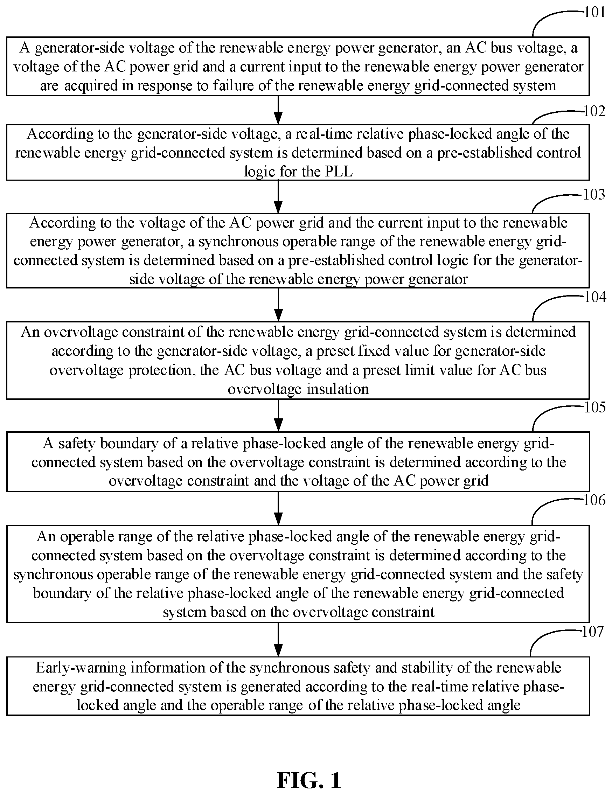

FIG. 1 is a schematic flowchart of a method for monitoring synchronous safety and stability of a renewable energy grid-connected system according to an exemplary embodiment of the application. The embodiment may be applied to an electronic equipment, here the renewable energy grid-connected system includes an AC power grid and a renewable energy power generator connected to the AC power grid based on VSC and synchronously operating with the AC power grid through PLL in the VSC. As shown in FIG. 1, the method includes the following operations.

In operation 101, a generator-side voltage of the renewable energy power generator, an AC bus voltage, a voltage of the AC power grid and a current input to the renewable energy power generator are acquired in response to failure of the renewable energy grid-connected system.

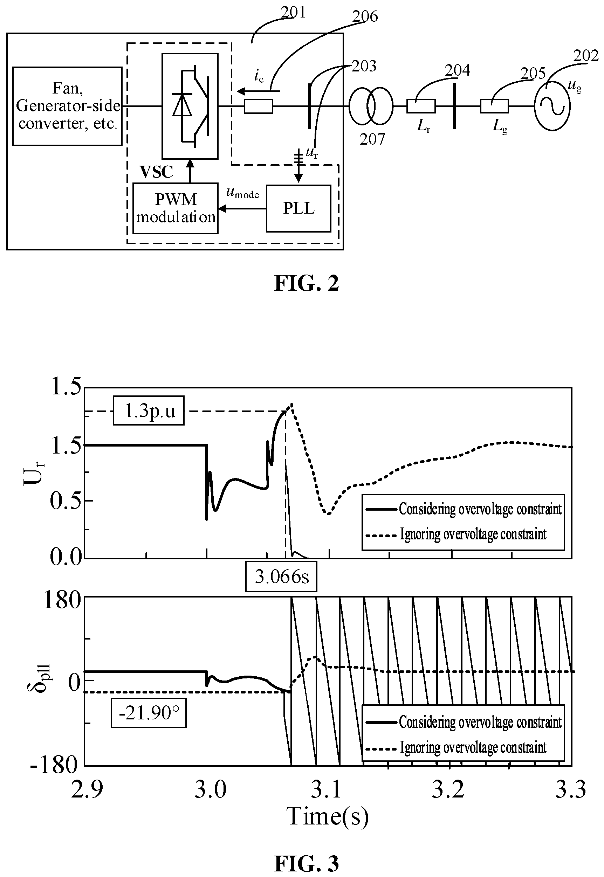

FIG. 2 is a topological structural diagram of a renewable energy grid-connected system according to an exemplary embodiment of the application. As shown in FIG. 2, in the embodiment, the renewable energy grid-connected system includes a renewable energy power generator 201 and an AC power grid 202. The renewable energy power generator 201 is connected to the AC power grid 202 based on VSC and synchronously operates with the AC power grid through PLL in the VSC. $i_c$ 206 is a current input to the renewable energy power generator 201, $u_r$ 203 and $u_g$ 202 are a generator-side voltage of the renewable energy power generator and a voltage of the AC power grid respectively, $L_r$ 204 and $L_g$ 205 are a circuit inductance and a Thevenin equivalent inductance of the AC power grid respectively.

In operation 102, according to the generator-side voltage, a real-time relative phase-locked angle of the renewable energy grid-connected system is determined based on a pre-established control logic for the PLL.

In some embodiments of the application, "according to the generator-side voltage, the real-time relative phase-locked angle of the renewable energy grid-connected system is determined based on the pre-established control logic for the PLL" in the operation 102 may be implemented by the following processes.

The generator-side voltage is introduced into the pre-established control logic for the PLL, to calculate a phase-locked angle of the renewable energy grid-connected system, here the control logic for the PLL is expressed as formula (1):

$$\begin{cases} \dot{\theta}_{\mathrm{pll}} = k_{\mathrm{p\_pll}}\,\dot{x}_{\mathrm{pll}} + k_{\mathrm{i\_pll}}x_{\mathrm{pll}} \\ \dot{x}_{\mathrm{pll}} = u_{\mathrm{r}}^{\mathrm{q}} \end{cases} \quad (1),$$

where $u_r$ is the generator-side voltage of the renewable energy power generator, $u_r^q$ is a q-axis component of the generator-side voltage of the renewable energy power generator, $\theta_{\mathrm{pll}}$ is the phase-locked angle of the renewable energy grid-connected system, $\dot{\theta}_{\mathrm{pll}}$ is a first derivative of the calculated phase-locked angle, $k_{\mathrm{p\_pll}}$ and $k_{\mathrm{i\_pll}}$ are proportional integral control (PID) parameters of the PLL, $x_{\mathrm{pll}}$ is an introduced intermediate variable, and $\dot{x}_{\mathrm{pll}}$ is a first derivative of the calculated intermediate variable.

The phase-locked angle of the renewable energy grid-connected system is introduced into a formula of calculating the real-time relative phase-locked angle, to determine the real-time relative phase-locked angle of the renewable energy grid-connected system, here the formula of calculating the real-time relative phase-locked angle is expressed as formula (2):

$$\delta_{\mathrm{pll}} = \theta_{\mathrm{pll}} - \omega_{\mathrm{g}}t \quad (2),$$

where $\delta_{\mathrm{pll}}$ is the real-time relative phase-locked angle of the renewable energy grid-connected system, $\omega_{\mathrm{g}}$ is an angular frequency of the voltage $u_g$ of the AC power grid, $t$ is a time variable.

In operation 103, according to the voltage of the AC power grid and the current input to the renewable energy power generator, a synchronous operable range of the renewable energy grid-connected system is determined based on a pre-established control logic for the generator-side voltage of the renewable energy power generator.

In some embodiments of the application, "according to the voltage of the AC power grid and the current input to the renewable energy power generator, the synchronous operable range of the renewable energy grid-connected system is determined based on the pre-established control logic for the generator-side voltage of the renewable energy power generator" in the operation 103 may be implemented by the following processes.

A formula of calculating a stable equilibrium point is determined based on the pre-established control logic for the generator-side voltage of the renewable energy power generator, here the control logic for the generator-side voltage of the renewable energy power generator is expressed as formula (3):

$$\begin{cases} u_r^d = u_g^d + i_c^q (\omega_{pll} L_\Sigma) \\ u_r^q = -u_g^q - i_c^d (\omega_{pll} L_\Sigma) \end{cases} \quad (3).$$

As may be seen in combination with FIG. 2, where $i_c$ is the current input to the renewable energy power generator, $u_r$ and $u_g$ are the generator-side voltage of the renewable energy power generator and the voltage of the AC power grid respectively, $u_r^d$ and $u_r^q$ are a d-axis component and a q-axis component of the generator-side voltage of the renewable energy power generator respectively, $u_g^d$ and $u_g^q$ are a d-axis component and a q-axis component of the voltage of the AC power grid respectively, $i_c^d$ and $i_c^q$ are a d-axis component and a q-axis component of the current input to the renewable energy power generator respectively, $L_r$ and $L_g$ are a circuit inductance and a Thevenin equivalent inductance of the AC power grid respectively, $L_\Sigma$ is a grid-connected inductance and is expressed as $L_\Sigma = L_r + L_g$, and $\omega_{pll}$ is an angular frequency of the PLL.

In response to $u_r^q = 0$ in formula (3), the formula of calculating the stable equilibrium point is obtained, which is expressed as formula (4):

$$-\omega_{pll} L_\Sigma i_c^d - U_g \sin \delta_{pll} = 0 \quad (4),$$

where $U_g$ is an amplitude of the voltage of the AC power grid.

The synchronous operable range of the renewable energy grid-connected system is determined as [ $\delta_{UEP1}$ , $\delta_{UEP2}$ ] by solving formula (4), where $\delta_{UEP1} = -180° - \arcsin(\omega_{pll} * L_\Sigma * i_c^d / U_g)$, $\delta_{UEP2} = 180° - \arcsin(\omega_{pll} * L_\Sigma * i_c^d / U_g)$.

In an embodiment, the renewable energy grid-connected system according to the embodiment of the application is simulated in time domain by establishing a high-order electromagnetic transient simulation software (Power Systems Computer Aided Design, PSCAD/EMTDC) model considering a control outer loop, a control inner loop, PLL and circuit dynamics, where it is assumed that id=0 and iq=-1. It may be known by introducing current assumption into formula (4) that the stable equilibrium point of the system is $\delta_{SEP}$=0°, a lower limit value of a stable region is $\delta_{UEP}$=-180°, and an upper limit value of the stable region is $\delta_{UEP2}$=180°.

Therefore, the synchronous operational range of the system is [-180°, 180°].

In operation 104, an overvoltage constraint of the renewable energy grid-connected system is determined according to the generator-side voltage, a preset fixed value for generator-side overvoltage protection, the AC bus voltage and a preset limit value for AC bus overvoltage insulation.

In some embodiments of the application, "the overvoltage constraint of the renewable energy grid-connected system is determined according to the generator-side voltage, the preset fixed value for generator-side overvoltage protection, the AC bus voltage and the preset limit value for AC bus overvoltage insulation" in the operation 104 may be implemented by the following processes.

An amplitude $U_r$ of the generator-side voltage is compared with the set fixed value $U_{rN}$ for the generator-side overvoltage protection, and an amplitude $U_s$ of the AC bus voltage is compared with the set limit value $U_{sN}$ for the bus overvoltage insulation.

Here the overvoltage constraint of the renewable energy grid-connected system is determined to be dominated by the amplitude $U_r$ of the generator-side voltage of the renewable energy power generator, in response to only the

amplitude $U_r$ of the generator-side voltage being not less than the fixed value $U_{rN}$ for the generator-side overvoltage protection.

The overvoltage constraint of the renewable energy grid-connected system is determined to be dominated by the amplitude $U_s$ of the AC bus voltage, in response to only the amplitude $U_s$ of the AC bus voltage being not less that the limit value $U_{sN}$ for the bus overvoltage insulation.

The overvoltage constraint of the renewable energy grid-connected system is determined to be dominated by the amplitude $U_r$ of the generator-side voltage of the renewable energy power generator and the amplitude $U_s$ of the AC bus voltage, in response to the amplitude $U_r$ of the generator-side voltage being not less than the fixed value $U_{rN}$ of the generator-side overvoltage protection and the amplitude $U_s$ of the AC bus voltage being not less than the limit value $U_{sN}$ of the bus overvoltage insulation.

In an embodiment, in order to ensure safety of the renewable energy power generator in a fault recovery process, the fixed value of the generator-side overvoltage protection for renewable energy generator-side is set as $U_{rN}$ = 1.30 p.u., and accordingly the limit value of the AC bus overvoltage insulation is set as $U_{sN}$=1.367p.u. in the embodiment of the application. In the embodiment of the application, the overvoltage constraint of the renewable energy grid-connected system is determined to be dominated by the amplitude $U_r$ of the generator-side voltage of the renewable energy power generator, according to the generator-side voltage of the renewable energy power generator and the AC bus voltage acquired when the renewable energy grid-connected system fails.

In operation 105, a safety boundary of a relative phase-locked angle of the renewable energy grid-connected system based on the overvoltage constraint is determined according to the overvoltage constraint and the voltage of the AC power grid.

In some embodiments of the application, "the safety boundary of the relative phase-locked angle of the renewable energy grid-connected system based on the overvoltage constraint is determined according to the overvoltage constraint and the voltage of the AC power grid" in the operation 105 may be implemented by the following processes.

In response to the overvoltage constraint of the renewable energy grid-connected system being dominated by the amplitude $U_r$ of the generator-side voltage of the renewable energy power generator, the safety boundary $\delta_{DOC1}$ of the relative phase-locked angle of the renewable energy grid-connected system under the overvoltage constraint thereof is calculated by formula (5):

$$\delta_{DOC1} = -\arccos\left\{\frac{1-U_{rN}^2}{2}\left(\frac{U_g}{\omega_{pll}L_\Sigma}+\frac{\omega_{pll}L_\Sigma}{U_g}\right)+U_{rN}^2\sin\delta_0\right\} \quad (5),$$

where $\delta_0$ is a relative phase-locked angle of the renewable energy grid-connected system under a rated operation state.

In response to the overvoltage constraint of the renewable energy grid-connected system being dominated by the amplitude $U_s$ of the AC bus voltage, the safety boundary $\delta_{DOC1}$ of the relative phase-locked angle of the renewable energy grid-connected system under the overvoltage constraint thereof is calculated by formula (6):

$$\delta_{DOC1} = -\arccos\left\{\frac{1-U_{sN}^2}{2}\left(\frac{U_g}{\omega_{pll}L_\Sigma}+\frac{\omega_{pll}L_\Sigma}{U_g}\right)+U_{sN}^2\sin\delta_0\right\} \quad (6).$$

In response to the overvoltage constraint of the renewable energy grid-connected system being dominated by the amplitude $U_r$ of the generator-side voltage of the renewable energy power generator and the amplitude $U_s$ of the AC bus voltage, the safety boundary $\delta_{DOC1}$ of the relative phase-locked angle of the renewable energy grid-connected system under constraints of the amplitude $U_r$ of the generator-side voltage and the amplitude $U_r$ of the AC bus voltage is determined as: the safety boundary of the relative phase-locked angle of the renewable energy grid-connected system under the constraint of the amplitude $U_r$ of the generator-side voltage determined according to formula (5), or the safety boundary of the relative phase-locked angle of the renewable energy grid-connected system under the constraint of the amplitude $U_s$ of the AC bus voltage determined according to formula (6).

In an embodiment, when the amplitude $U_r$ of the generator-side voltage of the renewable energy power generator reaches the fixed value $U_{rN}$ for generator-side overvoltage protection, the generator-side overvoltage protection operates without delay. Based on formula (5), the safety boundary of the relative phase-locked angle under the overvoltage constraint is $\delta_{DOC1}$ = -21.91° at the moment of a generator-side overvoltage protection action of the renewable energy power generator, which is far less than the lower limit value -180° of the synchronous operational range of the renewable energy grid-connected system.

In order to verify effectiveness of the method of the embodiment of the application, the synchronous operational range of the renewable energy grid-connected system is simulated and verified based on a high-order PSCAD/EMTDC model.

FIG. 3 is a curve diagram for simulating and verifying a synchronous operational range for a renewable energy grid-connected system according to an exemplary embodiment of the application. As shown in FIG. 3, the simulation result shows that when t=3.066s, the generator-side voltage of the renewable energy power generator reaches 1.30 p.u., which triggers overvoltage constraint for the renewable energy generator-side, which is consistent with data acquired during an actual operation. The overvoltage constraint for the renewable energy generator-side operates without delay, an out-of-limit renewable energy power generator is quickly cut off, a short-term reactive power surplus in the system is quickly removed, and the voltage of the system drops rapidly, which not only meets safety of the renewable energy power generator, but also ensures safety of a high proportion of renewable energy power systems, thus reducing probability of occurrence of large-scale off-grid risk of the renewable energy caused by overvoltage. At the moment when the overvoltage constraint for the renewable energy generator-side is triggered, an angle $\delta_{pll}$ between a d-axis component of VSC voltage and an electromotive force of an equivalent power supply of the AC power grid is put to -21.09°.

In operation 106, an operable range of the relative phase-locked angle of the renewable energy grid-connected system based on the overvoltage constraint is determined according to the synchronous operable range of the renewable energy grid-connected system and the safety boundary of the relative phase-locked angle of the renewable energy grid-connected system based on the overvoltage constraint.

In some embodiments of the application, "the operable range of the relative phase-locked angle of the renewable energy grid-connected system based on the overvoltage constraint is determined according to the synchronous operable range of the renewable energy grid-connected system and the safety boundary of the relative phase-locked angle of the renewable energy grid-connected system based on the overvoltage constraint" in the operation 106 may be implemented by the following processes.

An upper limit value $\delta_{UEP1}$ and a lower limit value $\delta_{UEP2}$ of the synchronous operable range $[\delta_{UEP1}, \delta_{UEP2}]$ of the renewable energy grid-connected system are compared with the safety boundary $\delta_{DOC1}$ of the relative phase-locked angle respectively.

The operable range of the relative phase-locked angle of the renewable energy grid-connected system based on the overvoltage constraint is determined as $[\delta_{DOC1}, \delta_{UEP2}]$, in response to $\delta_{UEP1} \leq \delta_{DOC1} \leq \delta_{UEP2}$.

The operable range of the relative phase-locked angle of the renewable energy grid-connected system based on the overvoltage constraint is determined as $[\delta_{UEP1}, \delta_{UEP2}]$, in response to $\delta_{DOC1} < \delta_{UEP1}$ or $\delta_{DOC1} < \delta_{UEP2}$.

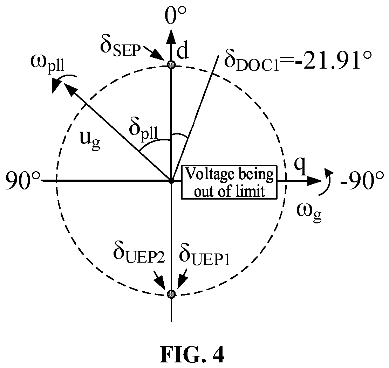

FIG. 4 is a schematic diagram of an operable range of a relative phase-locked angle based on overvoltage constraint of a renewable energy grid-connected system according to an exemplary embodiment of the application. As shown in FIG. 4, in the embodiment, the renewable energy grid-connected system has a stable equilibrium point $\delta_{SEP}=0°$, and the synchronous operational range of the system is [-180°, 180°]. However, when an angle $\delta_{pll}$ between a d-axis component of VSC voltage thereof and the voltage $u_g$ of the AC power grid is put to -21.09°, an overvoltage protection action will be caused by a renewable energy generator-side voltage being out-of-limit, which may endanger safety of the renewable energy grid-connected system. Here let the safety boundary of the relative phase-locked angle of the renewable energy grid-connected system based on the overvoltage constraint to be $\delta_{DOC1}$ =-21.09°, then when the relative phase-locked angle of the renewable energy grid-connected system is in an interval of (-180°, -21.91°), the overvoltage protection action will be caused by the renewable energy generator-side voltage being out-of-limit. Therefore, the operable range of the relative phase-locked angle of the renewable energy grid-connected system based on the overvoltage constraint is (-21.91°, 180°). The calculation result based on simulation in time domain verifies effectiveness of the method for monitoring synchronous safety and stability of a renewable energy grid-connected system according to the embodiment of the application, and the operable range of the relative phase-locked angle of the renewable energy grid-connected system based on the overvoltage constraint is greatly reduced.

In operation 107, early-warning information of the synchronous safety and stability of the renewable energy grid-connected system is generated according to the real-time relative phase-locked angle and the operable range of the relative phase-locked angle.

In some embodiments of the application, "early-warning information of the synchronous safety and stability of the renewable energy grid-connected system is generated according to the real-time relative phase-locked angle and the operable range of the relative phase-locked angle" in the operation 107 may be implemented by the following operations.

The renewable energy grid-connected system is determined to be in a synchronous safe and stable operation state, in response to $\delta_1 < \delta_{pll} < \delta_2$, here $\delta_1$ and $\delta_2$ are an upper limit value and a lower limit value of the operable range of the relative phase-locked angle of the renewable energy grid-connected system respectively.

The renewable energy grid-connected system is determined to be away from the synchronous safe and stable operation state, in response to $\delta_{pll} < \delta_1$ or $\delta_2 < \delta_{pll}$.

In an embodiment, the operable range of the relative phase-locked angle of the renewable energy grid-connected system is determined as (-21.91°, 180°) by the operation106. When the real-time relative phase-locked angle calculated according to acquired parameters falls within the operable range (-21.91°, 180°), the renewable energy grid-connected system is determined to be in the synchronous safe and stable operation state. On the contrary, when the real-time relative phase-locked angle does not fall within the operable range (-21.91°, 180°), the renewable energy grid-connected system is determined to be away from the synchronous safe and stable operation state.

Exemplary Apparatus

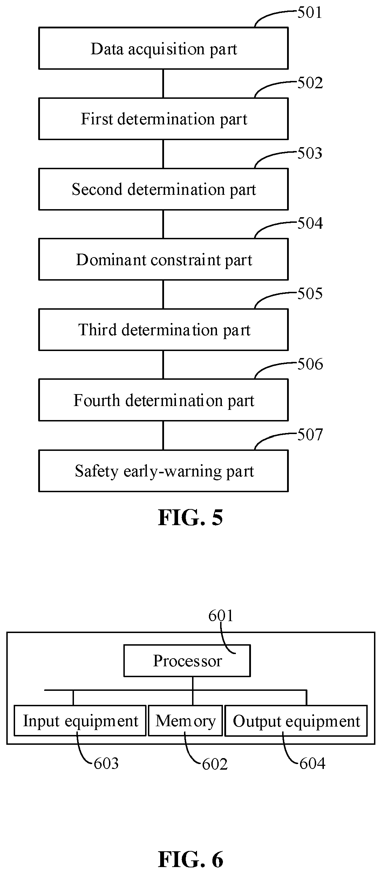

FIG. 5 is a schematic structural diagram of an apparatus for monitoring synchronous safety and stability of a renewable energy grid-connected system according to an exemplary embodiment of the application. As shown in FIG. 5, in the apparatus for monitoring synchronous safety and stability of a renewable energy grid-connected system described in the embodiment, here the renewable energy grid-connected system includes an AC power grid and a renewable energy power generator connected to the AC power grid based on VSC and synchronously operating with the AC power grid through PLL in the VSC, the apparatus includes a data acquisition part 501, a first determination part 502, a second determination part 503, a dominant constraint part 504, a third determination part 505, a fourth determination part 506, and a safety early-warning part 507.

The data acquisition part 501 is configured to acquire, in response to failure of the renewable energy grid-connected system, a generator-side voltage of the renewable energy power generator, an AC bus voltage, a voltage of the AC power grid and a current input to the renewable energy power generator.

The first determination part 502 is configured to determine, according to the generator-side voltage, a real-time relative phase-locked angle of the renewable energy grid-connected system based on a pre-established control logic for the PLL.

The second determination part 503 is configured to determine, according to the voltage of the AC power grid and the current input to the renewable energy power generator, a synchronous operable range of the renewable energy grid-connected system based on a pre-established control logic for the generator-side voltage of the renewable energy power generator.

The dominant constraint part 504 is configured to determine an overvoltage constraint of the renewable energy grid-connected system according to the generator-side voltage, a preset fixed value for generator-side overvoltage protection, the AC bus voltage and a preset limit value for AC bus overvoltage insulation.

The third determination part 505 is configured to determine, according to the overvoltage constraint and the voltage of the AC power grid, a safety boundary of a relative phase-locked angle of the renewable energy grid-connected system based on the overvoltage constraint.

The fourth determination part 506 is configured to determine, according to the synchronous operable range of the renewable energy grid-connected system and the safety boundary of the relative phase-locked angle of the renewable energy grid-connected system based on the overvoltage constraint, an operable range of the relative phase-locked angle of the renewable energy grid-connected system based on the overvoltage constraint.

The safety early-warning part 507 is configured to generate, according to the real-time relative phase-locked angle and the operable range of the relative phase-locked angle, early-warning information of the synchronous safety and stability of the renewable energy grid-connected system.

In some embodiments of the application, the first determination part 502 is further configured to: introduce the generator-side voltage into the pre-established control logic for the PLL, to calculate a phase-locked angle of the renewable energy grid-connected system, here the control logic for the PLL is expressed as:

$$\begin{cases} \dot{\theta}_{\text{pll}} = k_{\text{p\_pll}}\, \dot{\bar{x}}_{\text{pll}} + k_{\text{i\_pll}} x_{\text{pll}} \\ \dot{\bar{x}}_{\text{pll}} = u_{\text{r}}^{\text{q}} \end{cases} \quad (1),$$

where $u_{\text{r}}$ is the generator-side voltage of the renewable energy power generator, $u_{\text{r}}^{\text{q}}$ is a q-axis component of the generator-side voltage of the renewable energy power generator, $\theta_{\text{pll}}$ is the phase-locked angle of the renewable energy grid-connected system, $\dot{\theta}_{\text{pll}}$ is a first derivative of the calculated phase-locked angle, $k_{\text{p\_pll}}$ and $k_{\text{i\_pll}}$ are PID parameters of the PLL, $x_{\text{pll}}$ is an introduced intermediate variable, and $\dot{x}_{\text{pll}}$ is a first derivative of the calculated intermediate variable; and

introduce the phase-locked angle of the renewable energy grid-connected system into a formula of calculating the real-time relative phase-locked angle, to determine the real-time relative phase-locked angle of the renewable energy grid-connected system, here the formula of calculating the real-time relative phase-locked angle is expressed as:

$$\delta_{\mathrm{pll}} = \theta_{\mathrm{pll}} - \omega_g t \quad (2),$$

where $\delta_{\mathrm{pll}}$ is the real-time relative phase-locked angle of the renewable energy grid-connected system, $\omega_g$ is an angular frequency of a voltage $u_g$ of the AC power grid, $t$ is a time variable.

In some embodiments of the application, the second determination part 503 is further configured to: determine a formula of calculating a stable equilibrium point based on the pre-established control logic for the generator-side voltage of the renewable energy power generator, here the control logic for the generator-side voltage of the renewable energy power generator is expressed as:

$$\begin{cases} u_r^d = u_g^d + i_c^q (\omega_{\mathrm{pll}} L_\Sigma) \\ u_r^q = -u_g^q - i_c^d (\omega_{\mathrm{pll}} L_\Sigma) \end{cases} \quad (3),$$

where $i_c$ is the current input to the renewable energy power generator, $u_r$ and $u_g$ are the generator-side voltage of the renewable energy power generator and the voltage of the AC power grid respectively, $u_r^d$ and $u_r^q$ are a d-axis component and a q-axis component of the generator-side voltage of the renewable energy power generator respectively, $u_g^d$ and $u_g^q$ are a d-axis component and a q-axis component of the voltage of the AC power grid respectively, $i_c^d$ and $i_c^q$ are a d-axis component and a q-axis component of the current input to the renewable energy power generator respectively, $L_r$ and $L_g$ are a circuit inductance and a Thevenin equivalent inductance of the AC power grid respectively, $L_\Sigma$ is a grid-connected inductance and is expressed as $L_\Sigma = L_r + L_g$, and $\omega_{\mathrm{pll}}$ is an angular frequency of PLL;

in response to $u_r^q = 0$ in formula (3), obtain the formula of calculating the stable equilibrium point, which is expressed as:

$$-\omega_{\mathrm{pll}} L_\Sigma i_c^d - U_g \sin \delta_{\mathrm{pll}} = 0 \quad (4),$$

where $U_g$ is an amplitude of the voltage of the AC power grid; and
determine, by solving formula (4), the synchronous operable range of the renewable energy grid-connected system as [ $\delta_{\mathrm{UEP1}}$ , $\delta_{\mathrm{UEP2}}$ ], where

$$\delta_{\mathrm{UEP1}} = -180^\circ - \arcsin(\omega_{\mathrm{pll}} * L_\Sigma * i_c^d / U_g), \quad \delta_{\mathrm{UEP2}} = 180^\circ - \arcsin(\omega_{\mathrm{pll}} * L_\Sigma * i_c^d / U_g).$$

In some embodiments of the application, the dominant constraint part 504 is further configured to compare an amplitude $U_r$ of the generator-side voltage with the set fixed value $U_{rN}$ for the generator-side overvoltage protection, and compare an amplitude $U_s$ of the AC bus voltage with the set limit value $U_{sN}$ for the bus overvoltage insulation.

Here the overvoltage constraint of the renewable energy grid-connected system is determined to be dominated by the amplitude $U_r$ of the generator-side voltage of the renewable energy power generator, in response to only the amplitude $U_r$ of the generator-side voltage being not less than the fixed value $U_{rN}$ for the generator-side overvoltage protection.

The overvoltage constraint of the renewable energy grid-connected system is determined to be dominated by the amplitude $U_s$ of the AC bus voltage, in response to only the amplitude $U_s$ of the AC bus voltage being not less that the limit value $U_{sN}$ for the bus overvoltage insulation.

The overvoltage constraint of the renewable energy grid-connected system is determined to be dominated by the amplitude $U_r$ of the generator-side voltage of the renewable energy power generator and the amplitude $U_s$ of the AC bus voltage, in response to the amplitude $U_r$ of the generator-side voltage being not less than the fixed value $U_{rN}$ of the generator-side overvoltage protection and the amplitude $U_s$ of the AC bus voltage being not less than the limit value $U_{sN}$ of the bus overvoltage insulation.

In some embodiments of the application, the third determination part 505 is further configured to: in response to the overvoltage constraint of the renewable energy grid-connected system being dominated by the amplitude $U_r$ of the generator-side voltage of the renewable energy power generator, calculate the safety boundary $\delta_{\mathrm{DOC1}}$ of the relative phase-locked angle of the renewable energy grid-connected system under the overvoltage constraint thereof by:

$$\delta_{\mathrm{DOC1}} = -\arccos\left\{ \frac{1-U_{\mathrm{rN}}^2}{2}\left( \frac{U_{\mathrm{g}}}{\omega_{\mathrm{pll}}L_{\Sigma}} + \frac{\omega_{\mathrm{pll}}L_{\Sigma}}{U_{\mathrm{g}}} \right) + U_{\mathrm{rN}}^2 \sin\delta_0 \right\} \quad (5),$$

where $\delta_0$ is a relative phase-locked angle of the renewable energy grid-connected system under a rated operation state;

in response to the overvoltage constraint of the renewable energy grid-connected system being dominated by the amplitude $U_{\mathrm{s}}$ of the AC bus voltage, calculate the safety boundary $\delta_{\mathrm{DOC1}}$ of the relative phase-locked angle of the renewable energy grid-connected system under the overvoltage constraint thereof by:

$$\delta_{\mathrm{DOC1}} = -\arccos\left\{ \frac{1-U_{\mathrm{sN}}^2}{2}\left( \frac{U_{\mathrm{g}}}{\omega_{\mathrm{pll}}L_{\Sigma}} + \frac{\omega_{\mathrm{pll}}L_{\Sigma}}{U_{\mathrm{g}}} \right) + U_{\mathrm{sN}}^2 \sin\delta_0 \right\} \quad (6);$$

and

in response to the overvoltage constraint of the renewable energy grid-connected system being dominated by the amplitude $U_{\mathrm{r}}$ of the generator-side voltage of the renewable energy power generator and the amplitude $U_{\mathrm{s}}$ of the AC bus voltage, determine the safety boundary $\delta_{\mathrm{DOC1}}$ of the relative phase-locked angle of the renewable energy grid-connected system under constraints of the amplitude $U_{\mathrm{r}}$ of the generator-side voltage and the amplitude $U_{\mathrm{r}}$ of the AC bus voltage as: the safety boundary of the relative phase-locked angle of the renewable energy grid-connected system under the constraint of the amplitude $U_{\mathrm{r}}$ of the generator-side voltage determined according to formula (5), or the safety boundary of the relative phase-locked angle of the renewable energy grid-connected system under the constraint of the amplitude $U_{\mathrm{s}}$ of the AC bus voltage determined according to formula (6).

In some embodiments of the application, the fourth determination part 506 is further configured to compare an upper limit value $\delta_{\mathrm{UEP1}}$ and a lower limit value $\delta_{\mathrm{UEP2}}$ of the synchronous operable range $[\delta_{\mathrm{UEP1}}, \delta_{\mathrm{UEP2}}]$ of the renewable energy grid-connected system with the safety boundary $\delta_{\mathrm{DOC1}}$ of the relative phase-locked angle respectively; determine the operable range of the relative phase-locked angle of the renewable energy grid-connected system based on the overvoltage constraint as $[\delta_{\mathrm{DOC1}}, \delta_{\mathrm{UEP2}}]$, in response to $\delta_{\mathrm{UEP1}} \leq \delta_{\mathrm{DOC1}} \leq \delta_{\mathrm{UEP2}}$; and determine the operable range of the relative phase-locked angle of the renewable energy grid-connected system based on the overvoltage constraint as $[\delta_{\mathrm{UEP1}}, \delta_{\mathrm{UEP2}}]$, in response to $\delta_{\mathrm{DOC1}} < \delta_{\mathrm{UEP1}}$ or $\delta_{\mathrm{DOC1}} < \delta_{\mathrm{UEP2}}$.

In some embodiments of the application, the safety early-warning part 507 is further configured to:

determine the renewable energy grid-connected system to be in a synchronous safe and stable operation state, in response to $\delta_1 < \delta_{\mathrm{pll}} < \delta_2$, here $\delta_1$ and $\delta_2$ are an upper limit value and a lower limit value of the operable range of the relative phase-locked angle of the renewable energy grid-connected system respectively; and

determine the renewable energy grid-connected system to be away from the synchronous safe and stable operation state, in response to $\delta_{\mathrm{pll}} < \delta_1$ or $\delta_2 < \delta_{\mathrm{pll}}$.

The apparatus for monitoring synchronous safety and stability of a renewable energy grid-connected system according to the embodiment of the application, calculates and analyzes parameters acquired in response to failure of the renewable energy grid-connected system, to determine whether the real-time relative phase-locked angle falls within the operable range of the relative phase-locked angle of the renewable energy grid-connected system based on the overvoltage constraint. The apparatus adopts same operations and achieves the same technical effect as the method for monitoring synchronous safety and stability of a renewable energy grid-connected system according to the above embodiment of the application, which may refer to descriptions of the above method side here.

Exemplary Electronic Equipment

FIG. 6 is a structural diagram of an electronic equipment according to an exemplary embodiment of the application. The electronic equipment may be one or both of a first equipment and a second equipment, or a stand-alone equipment which is independent of the first equipment and the second equipment and may communicate with the first equipment and the second equipment to receive the acquired input signals from the first equipment and the second equipment. FIG. 6 illustrates a block diagram of an electronic equipment according to an embodiment of the application. As shown in FIG. 6, the electronic equipment includes one or more processors 601 and memories 602.

The processor 601 may be a Central Processing Unit (CPU) or another form of processing unit with data processing capability and/or instruction executing capability, and may control other components in the electronic equipment to perform desired functions.

The memory 602 may include one or more computer program products which may include various forms of computer-readable storage medium such as a volatile memory and/or a non-volatile memory. For example, the volatile memory may include a Random Access Memory (RAM), a cache, or the like. For example, the non-volatile memory may include a Read Only Memory (ROM), a hard disk, a flash memory, or the like. One or more computer program instructions may be stored on the computer-readable storage medium. The processor 601 may run the program instructions to implement the method for monitoring synchronous safety and stability of a renewable energy grid-connected system as disclosed above in various embodiments and in form of a software program, and/or other desired functions. In an example, the electronic equipment may also include an input equipment 603 and an output equipment 604 which are interconnected by a bus system and/or other forms of connection mechanism (not shown). Furthermore, for example, the input equipment 603 may also include a keyboard, a mouse, or the like.

The output equipment 604 may output various information to the outside. For example, the output equipment 604 may include a display, a speaker, a printer, a communication network, a remote output equipment connected with the communication network, or the like.

Of course, for the sake of simplicity, only some of components related to the application in the electronic equipment are shown in FIG. 6. Components such as a bus, input/output interface, or the like are omitted. In addition, the electronic equipment may include any other suitable components depending on a particular application.

Exemplary Computer Program Product and Computer-readable Storage Medium

In addition to the above method and equipment, the embodiments of the application may also be a computer program product, which may include computer program instructions. When the computer program instructions are run by the processor, the computer program instructions enable the processor to perform operations of the method for monitoring synchronous safety and stability of a renewable energy grid-connected system according to various embodiments of the application described in the above "Exemplary Method" section of the specification.

Program codes of the computer program product may be written in any combination of one or more programming languages to perform operations of the embodiments of the application. The programming languages include object-oriented programming languages such as Java, C + +, or the like, as well as conventional procedural programming languages such as "C" language or similar programming languages. The program codes may be executed entirely on a user computing equipment, partly on the user equipment, as a separate software package, partly on the user computing equipment and partly on a remote computing equipment, or entirely on the remote computing equipment/server.

Furthermore, an embodiment of the application also provides a computer program including computer-readable codes, a processor of an electronic equipment implements any of the methods for monitoring synchronous safety and stability of a renewable energy grid-connected system according to the above embodiments, when the computer-readable codes are run in the electronic equipment.

Furthermore, an embodiment of the application may also be a computer-readable storage medium, having stored thereon computer program instructions. The computer program instructions enable a processor to perform the method for monitoring synchronous safety and stability of a renewable energy grid-connected system according to various embodiments of the application described in the above "Exemplary Method" section of the specification, when the computer program instructions are run by the processor.

The computer-readable storage medium may adopt any combination of one or more readable mediums. The readable medium may be a readable signal medium or a readable storage medium. For example, the readable storage medium may include, but is not limited to electrical, magnetic, optical, electromagnetic, infrared, or semiconductor systems, apparatuses, equipments, or any combination thereof. More specific examples (non-exhaustive list) of the readable storage medium include electrical connection with one or more wires, portable disk, hard disk, RAM, ROM, Erasable Programmable Read Only Memory (EPROM) or flash memory, optical fiber, portable Compact Disc Read-Only Memory (CD-ROM), optical storage equipment, magnetic storage equipment, or any suitable combination thereof.

Basic principles of the application have been described above in combination with specific embodiments, however, it should be noted that advantages, benefits, effects, or the like mentioned in the embodiments of the application are only examples, rather than limitations, and cannot be considered as necessary for each of the embodiments of the application. Furthermore, specific details as disclosed above are only for the purpose of example and ease of understanding, rather than limitations, and the above details do not limit the application as being implemented with the above specific details necessarily.

Each of the embodiments in the specification is described in a progressive manner, and each of the embodiments focuses on descriptions of differences from other embodiments. The same or similar parts among the embodiments may be referred by each other. As far as the system embodiments are concerned, descriptions thereof are relatively simple since they basically correspond to the method embodiments, and the relevant parts may be refer to part of descriptions of the method embodiments.

Block diagrams of components, apparatuses, equipments, systems related in the application are only illustrative examples and are not intended to require or imply that they must be connected, arranged and configured in the manners shown in the block diagrams. As appreciated by those skilled in the art, these components, apparatuses, equipments, systems may be connected, arranged and configured in any manner. Words such as "include", "including" "having" or the like are open-ended words which refer to "including, but not limited to" and may be used interchangeably among them. Words "or" and "and" as used here refer to words "and/or" and may be used interchangeably among them, unless otherwise indicated by the context expressly. Word "such as" as used here refers to a phrase "such as, but not limited to" and may be used interchangeably among them.

The methods and apparatuses according to the embodiments of the application may be implemented in many ways. For example, the methods and apparatuses of the application may be implemented by software, hardware, firmware, or any combination of the software, hardware and firmware. The above sequence of operations of the method is only illustrative and the operations of the method according to the embodiments of the application are not limited to the sequence as specifically mentioned above, unless otherwise stated specifically. Furthermore, in some embodiments, the application may also be implemented as programs recorded in a recording medium and including machine-readable instructions for implementing the method according to the application. Therefore, the embodiments of the application also contain a recording medium storing programs for performing the method according to the application.

It should also be noted that components or operations may be decomposed and/or recombined in the apparatuses, equipments and methods according to the embodiments of the application. These decomposition and/or recombination should be considered as equivalent solutions of the application. The above descriptions of the disclosed aspects are provided to enable any person skilled in the art to make or use the application. Various modifications to these aspects may be apparent to those skilled in the art, and general principles defined here may be applied to other aspects without departing from the scope of the embodiments of the application. Therefore, the embodiments of the application are not intended to be limited to the aspects shown here, instead, are in the widest range consistent with the principles and novel features disclosed here.

The above descriptions have been given for the purpose of illustration and description. Furthermore, the descriptions are not intended to limit the embodiments of the application to the forms disclosed here. Although a number of exemplary aspects and embodiments have been discussed above, certain variations, modifications, changes, additions and sub-combinations thereof may be appreciated by those skilled in the art. The scope of the invention is defined by the appended claims.

Industrial Practicality

The embodiments of the application disclose a method and apparatus for monitoring synchronous safety and stability of a renewable energy grid-connected system, a medium, an equipment and a program. The method includes the following operations. According to acquired parameters, a real-time relative phase-locked angle is calculated, a synchronous operable range of the renewable energy grid-connected system is determined, and a safety boundary of a relative phase-locked angle of the renewable energy grid-connected system based on an overvoltage constraint is determined. An operable range of the relative phase-locked angle of the renewable energy grid-connected system based on the overvoltage constraint is determined according to the synchronous operable range of the renewable energy grid-connected system and the safety boundary of the relative phase-locked angle. The synchronous safety and stability of the renewable energy grid-connected system is judged by judging whether the real-time phase-locked angle exists in the operable range of the relative phase-locked angle of the renewable energy grid-connected system based on the overvoltage constraint.

**Claims**

1.  A method for monitoring synchronous safety and stability of a renewable energy grid-connected system, the renewable energy grid-connected system comprises an alternating current, AC, power grid (202) and a renewable energy power generator (201) connected to the AC power grid (202) based on a voltage source converter, VSC, and synchronously operating with the AC power grid (202) through a phase-locked loop, PLL, in the VSC, the method comprising:

    acquiring (101), in response to failure of the renewable energy grid-connected system, a generator-side voltage of the renewable energy power generator (201), an AC bus voltage, a voltage of the AC power grid (202) and a current input to the renewable energy power generator (201);

determining (102), according to the generator-side voltage, a real-time relative phase-locked angle of the renewable energy grid-connected system based on a pre-established control logic for the PLL;

determining (103), according to the voltage of the AC power grid (202) and the current input to the renewable energy power generator (201), a synchronous operable range of the renewable energy grid-connected system based on a pre-established control logic for the generator-side voltage of the renewable energy power generator (201);

determining (104) an overvoltage constraint of the renewable energy grid-connected system according to the generator-side voltage, a preset fixed value for generator-side overvoltage protection, the AC bus voltage and a preset limit value for AC bus overvoltage insulation;

**characterised by**:

determining (105), according to the overvoltage constraint and the voltage of the AC power grid (202), a safety boundary of a relative phase-locked angle of the renewable energy grid-connected system based on the overvoltage constraint;

determining (106), according to the synchronous operable range of the renewable energy grid-connected system and the safety boundary of the relative phase-locked angle of the renewable energy grid-connected system based on the overvoltage constraint, an operable range of the relative phase-locked angle of the renewable energy grid-connected system based on the overvoltage constraint; and

generating (107), according to the real-time relative phase-locked angle and the operable range of the relative phase-locked angle, early-warning information of the synchronous safety and stability of the renewable energy grid-connected system.

2. The method of claim 1, wherein determining (102), according to the generator-side voltage, the real-time relative phase-locked angle of the renewable energy grid-connected system based on the pre-established control logic for the PLL, comprises:

introducing the generator-side voltage into the pre-established control logic for the PLL, to calculate a phase-locked angle of the renewable energy grid-connected system, wherein the control logic for the PLL is expressed as:

$$\begin{cases} \dot{\theta}_{\text{pll}} = k_{\text{p\_pll}}\, \dot{x}_{\text{pll}} + k_{\text{i\_pll}} x_{\text{pll}} \\ \dot{x}_{\text{pll}} = u_{\text{r}}^{\text{q}} \end{cases} \quad (1),$$

where $u_{\text{r}}$ is the generator-side voltage of the renewable energy power generator (201), $u_{\text{r}}^{\text{q}}$ is a q-axis component of the generator-side voltage of the renewable energy power generator (201), $\theta_{\text{pll}}$ is the phase-locked angle of the renewable energy grid-connected system, $\theta_{\text{pll}}$ is a first derivative of the calculated phase-locked angle, $k_{\text{p\_pll}}$ and $k_{\text{i\_pll}}$ are proportional integral control, PID, parameters of the PLL, $x_{\text{pll}}$ is an introduced intermediate variable, and $\dot{x}_{\text{pll}}$ is a first derivative of the calculated intermediate variable; and

introducing the phase-locked angle of the renewable energy grid-connected system into a formula of calculating the real-time relative phase-locked angle, to determine the real-time relative phase-locked angle of the renewable energy grid-connected system, wherein the formula of calculating the real-time relative phase-locked angle is expressed as:

$$\delta_{\text{pll}} = \theta_{\text{pll}} - \omega_{\text{g}} t \quad (2),$$

where $\delta_{\text{pll}}$ is the real-time relative phase-locked angle of the renewable energy grid-connected system, $\omega_{\text{g}}$ is an angular frequency of a voltage $u_g$ of the AC power grid (202), $t$ is a time variable.

3. The method of claim 1 or 2, wherein determining (103), according to the voltage of the AC power grid (202) and the current input to the renewable energy power generator (201), the synchronous operable range of the renewable energy grid-connected system based on the pre-established control logic for the generator-side voltage of the renewable energy power generator (201), comprises:

determining a formula of calculating a stable equilibrium point based on the pre-established control logic for the generator-side voltage of the renewable energy power generator (201), wherein the control logic for the generator-side voltage of the renewable energy power generator (201) is expressed as:

$$\begin{cases} u_r^d = u_g^d + i_c^q (\omega_{pll} L_\Sigma) \\ u_r^q = -u_g^q - i_c^d (\omega_{pll} L_\Sigma) \end{cases} \quad (3),$$

where $i_c$ is the current input to the renewable energy power generator (201), $u_r$ and $u_g$ are the generator-side voltage of the renewable energy power generator (201) and the voltage of the AC power grid (202) respectively, $u_r^d$ and $u_r^q$ are a d-axis component and a q-axis component of the generator-side voltage of the renewable energy power generator (201) respectively, $u_g^d$ and $u_g^q$ are a d-axis component and a q-axis component of the voltage of the AC power grid (202) respectively, $i_c^d$ and $i_c^q$ are a d-axis component and a q-axis component of the current input to the renewable energy power generator (201) respectively, $L_r$ and $L_g$ are a circuit inductance and a Thevenin equivalent inductance of the AC power grid (202) respectively, $L_\Sigma$ is a grid-connected inductance and is expressed as $L_\Sigma = L_r + L_g$ , and $\omega_{pll}$ is an angular frequency of PLL;

in response to $u_r^q = 0$ in formula (3), obtaining the formula of calculating the stable equilibrium point, which is expressed as:

$$-\omega_{pll} L_\Sigma i_c^d - U_g \sin \delta_{pll} = 0 \quad (4),$$

where $U_g$ is an amplitude of the voltage of the AC power grid (202); and
determining, by solving formula (4), the synchronous operable range of the renewable energy grid-connected system as [ $\delta_{UEP1}$ , $\delta_{UEP2}$ ], where

$$\delta_{UEP1} = -180^\circ - \arcsin(\omega_{pll} * L_\Sigma * i_c^d / U_g), \quad \delta_{UEP2} = 180^\circ - \arcsin(\omega_{pll} * L_\Sigma * i_c^d / U_g).$$

4. The method of any one of claims 1 to 3, wherein determining (104) the overvoltage constraint of the renewable energy grid-connected system according to the generator-side voltage, the preset fixed value for generator-side overvoltage protection, the AC bus voltage and the preset limit value for AC bus overvoltage insulation, comprises:

comparing an amplitude $U_r$ of the generator-side voltage with the preset fixed value $U_{rN}$ for the generator-side overvoltage protection, and comparing an amplitude $U_s$ of the AC bus voltage with the preset limit value $U_{sN}$ for the bus overvoltage insulation,
wherein the overvoltage constraint of the renewable energy grid-connected system is determined to be dominated by the amplitude $U_r$ of the generator-side voltage of the renewable energy power generator (201), in response to only the amplitude $U_r$ of the generator-side voltage being not less than the fixed value $U_{rN}$ for the generator-side overvoltage protection,
the overvoltage constraint of the renewable energy grid-connected system is determined to be dominated by the amplitude $U_s$ of the AC bus voltage, in response to only the amplitude $U_s$ of the AC bus voltage being not less that the limit value $U_{sN}$ for the bus overvoltage insulation, and
the overvoltage constraint of the renewable energy grid-connected system is determined to be dominated by the amplitude $U_r$ of the generator-side voltage of the renewable energy power generator (201) and the amplitude $U_s$ of the AC bus voltage, in response to the amplitude $U_r$ of the generator-side voltage being not less than the fixed value $U_{rN}$ of the generator-side overvoltage protection and the amplitude $U_s$ of the AC bus voltage being not less than the limit value $U_{sN}$ of the bus overvoltage insulation.

5. The method of claim 4, wherein determining (105), according to the overvoltage constraint and the voltage of the AC power grid (202), the safety boundary of the relative phase-locked angle of the renewable energy grid-connected system based on the overvoltage constraint, comprises:

in response to the overvoltage constraint of the renewable energy grid-connected system being dominated by the amplitude $U_r$ of the generator-side voltage of the renewable energy power generator (201), calculating the safety

boundary $\delta_{\text{DOC1}}$ of the relative phase-locked angle of the renewable energy grid-connected system under the overvoltage constraint thereof by:

$$\delta_{\text{DOC1}} = -\arccos\left\{\frac{1-U_{\text{rN}}^2}{2}\left(\frac{U_{\text{g}}}{\omega_{\text{pll}}L_{\Sigma}} + \frac{\omega_{\text{pll}}L_{\Sigma}}{U_{\text{g}}}\right) + U_{\text{rN}}^2\sin\delta_0\right\} \quad (5),$$

where $\delta_0$ is a relative phase-locked angle of the renewable energy grid-connected system under a rated operation state;

in response to the overvoltage constraint of the renewable energy grid-connected system being dominated by the amplitude $U_{\text{s}}$ of the AC bus voltage, calculating the safety boundary $\delta_{\text{DOC1}}$ of the relative phase-locked angle of the renewable energy grid-connected system under the overvoltage constraint thereof by:

$$\delta_{\text{DOC1}} = -\arccos\left\{\frac{1-U_{\text{sN}}^2}{2}\left(\frac{U_{\text{g}}}{\omega_{\text{pll}}L_{\Sigma}} + \frac{\omega_{\text{pll}}L_{\Sigma}}{U_{\text{g}}}\right) + U_{\text{sN}}^2\sin\delta_0\right\} \quad (6);$$

and

in response to the overvoltage constraint of the renewable energy grid-connected system being dominated by the amplitude $U_{\text{r}}$ of the generator-side voltage of the renewable energy power generator (201) and the amplitude $U_{\text{s}}$ of the AC bus voltage, determining the safety boundary $\delta_{\text{DOC1}}$ of the relative phase-locked angle of the renewable energy grid-connected system under constraints of the amplitude $U_{\text{r}}$ of the generator-side voltage and the amplitude $U_{\text{s}}$ of the AC bus voltage as: the safety boundary of the relative phase-locked angle of the renewable energy grid-connected system under the constraint of the amplitude $U_{\text{r}}$ of the generator-side voltage determined according to formula (5), or the safety boundary of the relative phase-locked angle of the renewable energy grid-connected system under the constraint of the amplitude $U_{\text{s}}$ of the AC bus voltage determined according to formula (6).

6. The method of any one of claims 1 to 5, wherein determining (106), according to the synchronous operable range of the renewable energy grid-connected system and the safety boundary of the relative phase-locked angle of the renewable energy grid-connected system based on the overvoltage constraint, the operable range of the relative phase-locked angle of the renewable energy grid-connected system based on the overvoltage constraint, comprises:

comparing an upper limit value $\delta_{\text{UEP1}}$ and a lower limit value $\delta_{\text{UEP2}}$ of the synchronous operable range $[\delta_{\text{UEP1}}, \delta_{\text{UEP2}}]$ of the renewable energy grid-connected system with the safety boundary $\delta_{\text{DOC1}}$ of the relative phase-locked angle respectively;

determining the operable range of the relative phase-locked angle of the renewable energy grid-connected system based on the overvoltage constraint as $[\delta_{\text{DOC1}}, \delta_{\text{UEP2}}]$, in response to $\delta_{\text{UEP1}} \leq \delta_{\text{DOC1}} \leq \delta_{\text{UEP2}}$; and

determining the operable range of the relative phase-locked angle of the renewable energy grid-connected system based on the overvoltage constraint as $[\delta_{\text{UEP1}}, \delta_{\text{UEP2}}]$, in response to $\delta_{\text{DOC1}} < \delta_{\text{UEP1}}$ or $\delta_{\text{DOC1}} < \delta_{\text{UEP2}}$.

7. The method of any one of claims 1 to 6, wherein generating (107), according to the real-time relative phase-locked angle and the operable range of the relative phase-locked angle, early-warning information of the synchronous safety and stability of the renewable energy grid-connected system, comprises:

determining the renewable energy grid-connected system to be in a synchronous safe and stable operation state, in response to $\delta_1 < \delta_{\text{pll}} < \delta_2$, wherein $\delta_1$ and $\delta_2$ are an upper limit value and a lower limit value of the operable range of the relative phase-locked angle of the renewable energy grid-connected system respectively; and

determining the renewable energy grid-connected system to be away from the synchronous safe and stable operation state, in response to $\delta_{\text{pll}} < \delta_1$ or $\delta_2 < \delta_{\text{pll}}$.

8. An apparatus for monitoring synchronous safety and stability of a renewable energy grid-connected system, the renewable energy grid-connected system comprises an alternating current, AC, power grid (202) and a renewable energy power generator (201) connected to the AC power grid (202) based on a voltage source converter, VSC, and configured to synchronously operate with the AC power grid (202) through a phase-locked loop, PLL, in the VSC, the apparatus comprising:

a data acquisition part (501) configured to acquire, in response to failure of the renewable energy grid-connected system, a generator-side voltage of the renewable energy power generator (201), an AC bus voltage, a voltage of the AC power grid (202) and a current input to the renewable energy power generator (201);

a first determination part (502) configured to determine, according to the generator-side voltage, a real-time relative phase-locked angle of the renewable energy grid-connected system based on a pre-established control logic for the PLL;

a second determination part (503) configured to determine, according to the voltage of the AC power grid (202) and the current input to the renewable energy power generator (201), a synchronous operable range of the renewable energy grid-connected system based on a pre-established control logic for the generator-side voltage of the renewable energy power generator (201);

a dominant constraint part (504) configured to determine an overvoltage constraint of the renewable energy grid-connected system according to the generator-side voltage, a preset fixed value for generator-side overvoltage protection, the AC bus voltage and a preset limit value for AC bus overvoltage insulation; **characterised by**:

a third determination part (505) configured to determine, according to the overvoltage constraint and the voltage of the AC power grid (202), a safety boundary of the relative phase-locked angle of the renewable energy grid-connected system based on the overvoltage constraint;

a fourth determination part (506) configured to determine, according to the synchronous operable range of the renewable energy grid-connected system and the safety boundary of the relative phase-locked angle of the renewable energy grid-connected system based on the overvoltage constraint, an operable range of the relative phase-locked angle of the renewable energy grid-connected system based on the overvoltage constraint; and

a safety early-warning part (507) configured to generate, according to the real-time relative phase-locked angle and the operable range of the relative phase-locked angle, early-warning information of the synchronous safety and stability of the renewable energy grid-connected system.

9. The apparatus of claim 1, wherein the first determination part (502) is further configured to:

introduce the generator-side voltage into the pre-established control logic for the PLL, to calculate a phase-locked angle of the renewable energy grid-connected system, wherein the control logic for the PLL is expressed as:

$$\begin{cases} \bar{\theta}_{\mathrm{pll}} = k_{\mathrm{p\_pll}}\, \bar{x}_{\mathrm{pll}} + k_{\mathrm{i\_pll}} x_{\mathrm{pll}} \\ \bar{x}_{\mathrm{pll}} = u_{\mathrm{r}}^{\mathrm{q}} \end{cases} \quad (1),$$

where $u_{\mathrm{r}}$ is the generator-side voltage of the renewable energy power generator (201), $u_{\mathrm{r}}^{\mathrm{q}}$ is a q-axis component of the generator-side voltage of the renewable energy power generator (201), $\theta_{\mathrm{pll}}$ is the phase-locked angle of the renewable energy grid-connected system, $\bar{\theta}_{\mathrm{pll}}$ is a first derivative of the calculated phase-locked angle, $k_{\mathrm{p\_pll}}$ and $k_{\mathrm{i\_pll}}$ are proportional integral control, PID, parameters of the PLL, $x_{\mathrm{pll}}$ is an introduced intermediate variable, and $\bar{x}_{\mathrm{pll}}$ is a first derivative of the calculated intermediate variable; and

introduce the phase-locked angle of the renewable energy grid-connected system into a formula of calculating the real-time relative phase-locked angle, to determine the real-time relative phase-locked angle of the renewable energy grid-connected system, wherein the formula of calculating the real-time relative phase-locked angle is expressed as:

$$\delta_{\mathrm{pll}} = \theta_{\mathrm{pll}} - \omega_{\mathrm{g}} t \quad (2),$$

where $\delta_{\mathrm{pll}}$ is the real-time relative phase-locked angle of the renewable energy grid-connected system, $\omega_{\mathrm{g}}$ is an angular frequency of a voltage $u_g$ of the AC power grid *(202), t* is a time variable.

10. The apparatus of claim 8 or 9, wherein the second determination part (503) is further configured to:

determine a formula of calculating a stable equilibrium point based on the pre-established control logic for the generator-side voltage of the renewable energy power generator (201), wherein the control logic for the generator-side voltage of the renewable energy power generator (201) is expressed as:

$$\begin{cases} u_r^d = u_g^d + i_c^q(\omega_{pll}L_\Sigma) \\ u_r^q = -u_g^q - i_c^d(\omega_{pll}L_\Sigma) \end{cases} \quad (3),$$

where $i_c$ is the current input to the renewable energy power generator (201), $u_r$ and $u_g$ are the generator-side voltage of the renewable energy power generator (201) and the voltage of the AC power grid (202) respectively, $u_r^d$ and $u_r^q$ are a d-axis component and a q-axis component of the generator-side voltage of the renewable energy power generator (201) respectively, $u_g^d$ and $u_g^q$ are a d-axis component and a q-axis component of the voltage of the AC power grid (202) respectively, $i_c^d$ and $i_c^q$ are a d-axis component and a q-axis component of the current input to the renewable energy power generator (201) respectively, $L_r$ and $L_g$ are a circuit inductance and a Thevenin equivalent inductance of the AC power grid (202) respectively, $L_\Sigma$ is a grid-connected inductance and is expressed as $L_\Sigma = L_r + L_g$, and $\omega_{pll}$ is an angular frequency of the PLL;

in response to $u_r^q = 0$ in formula (3), obtain the formula of calculating the stable equilibrium point, which is expressed as:

$$-\omega_{pll}L_\Sigma i_c^d - U_g \sin\delta_{pll} = 0 \quad (4),$$

where $U_g$ is an amplitude of the voltage of the AC power grid (202); and
determine, by solving formula (4), the synchronous operable range of the renewable energy grid-connected system as [ $\delta_{UEP1}$, $\delta_{UEP2}$ ], where

$$\delta_{UEP1} = -180^\circ - \arcsin(\omega_{pll} * L_\Sigma * i_c^d / U_g), \quad \delta_{UEP2} = 180^\circ - \arcsin(\omega_{pll} * L_\Sigma * i_c^d / U_g).$$

11. The apparatus of any one of claims 8 to 10, wherein the dominant constraint part (504) is further configured to:

compare an amplitude $U_r$ of the generator-side voltage with the preset fixed value $U_{rN}$ for the generator-side overvoltage protection, and compare an amplitude $U_s$ of the AC bus voltage with the preset limit value $U_{sN}$ for the bus overvoltage insulation,
wherein the overvoltage constraint of the renewable energy grid-connected system is determined to be dominated by the amplitude $U_r$ of the generator-side voltage of the renewable energy power generator (201), in response to only the amplitude $U_r$ of the generator-side voltage being not less than the fixed value $U_{rN}$ for the generator-side overvoltage protection,
the overvoltage constraint of the renewable energy grid-connected system is determined to be dominated by the amplitude $U_s$ of the AC bus voltage, in response to only the amplitude $U_s$ of the AC bus voltage being not less that the limit value $U_{sN}$ for the bus overvoltage insulation, and
the overvoltage constraint of the renewable energy grid-connected system is determined to be dominated by the amplitude $U_r$ of the generator-side voltage of the renewable energy power generator (201) and the amplitude $U_s$ of the AC bus voltage, in response to the amplitude $U_r$ of the generator-side voltage being not less than the fixed value $U_{rN}$ of the generator-side overvoltage protection and the amplitude $U_s$ of the AC bus voltage being not less than the limit value $U_{sN}$ of the bus overvoltage insulation.

12. The apparatus of claim 11 wherein the third determination part (505) is further configured to:
in response to the overvoltage constraint of the renewable energy grid-connected system being dominated by the amplitude $U_r$ of the generator-side voltage of the renewable energy power generator (201), calculate the safety boundary $\delta_{DOC1}$ of the relative phase-locked angle of the renewable energy grid-connected system under the overvoltage constraint thereof by:

$$\delta_{DOC1} = -\arccos\left\{\frac{1-U_{rN}^2}{2}\left(\frac{U_g}{\omega_{pll}L_\Sigma} + \frac{\omega_{pll}L_\Sigma}{U_g}\right) + U_{rN}^2\sin\delta_0\right\} \quad (5),$$

where $\delta_0$ is a relative phase-locked angle of the renewable energy grid-connected system under a rated operation state;

in response to the overvoltage constraint of the renewable energy grid-connected system being dominated by the amplitude $U_s$ of the AC bus voltage, calculate the safety boundary $\delta_{DOC1}$ of the relative phase-locked angle of the renewable energy grid-connected system under the overvoltage constraint thereof by:

$$\delta_{\text{DOC1}} = -\arccos\left\{\frac{1-U_{sN}^2}{2}\left(\frac{U_g}{\omega_{pll}L_\Sigma}+\frac{\omega_{pll}L_\Sigma}{U_g}\right)+U_{sN}^2\sin\delta_0\right\} \quad (6);$$

and

in response to the overvoltage constraint of the renewable energy grid-connected system being dominated by the amplitude $U_r$ of the generator-side voltage of the renewable energy power generator (201) and the amplitude $U_s$ of the AC bus voltage, determine the safety boundary $\delta_{DOC1}$ of the relative phase-locked angle of the renewable energy grid-connected system under constraints of the amplitude $U_r$ of the generator-side voltage and the amplitude $U_s$ of the AC bus voltage as: the safety boundary of the relative phase-locked angle of the renewable energy grid-connected system under the constraint of the amplitude $U_r$ of the generator-side voltage determined according to formula (5), or the safety boundary of the relative phase-locked angle of the renewable energy grid-connected system under the constraint of the amplitude $U_s$ of the AC bus voltage determined according to formula (6).

13. The apparatus of any one of claims 8 to 12, wherein the fourth determination part (506) is further configured to:

compare an upper limit value $\delta_{UEP1}$ and a lower limit value $\delta_{UEP2}$ of the synchronous operable range [$\delta_{UEP1}$, $\delta_{UEP2}$] of the renewable energy grid-connected system with the safety boundary $\delta_{DOC1}$ of the relative phase-locked angle respectively;

determine the operable range of the relative phase-locked angle of the renewable energy grid-connected system based on the overvoltage constraint as [$\delta_{DOC1}$, $\delta_{UEP2}$], in response to $\delta_{UEP1} \leq \delta_{DOC1} \leq \delta_{UEP2}$; and

determine the operable range of the relative phase-locked angle of the renewable energy grid-connected system based on the overvoltage constraint as [$\delta_{UEP1}$, $\delta_{UEP2}$], in response to $\delta_{DOC1} < \delta_{UEP1}$ or $\delta_{DOC1} < \delta_{UEP2}$.

14. The apparatus of any one of claims 8 to 13, wherein the safety early-warning part (507) is further configured to:

determine the renewable energy grid-connected system to be in a synchronous safe and stable operation state, in response to $\delta_1 < \delta_{pll} < \delta_2$, wherein $\delta_1$ and $\delta_2$ are an upper limit value and a lower limit value of the operable range of the relative phase-locked angle of the renewable energy grid-connected system respectively; and

determine the renewable energy grid-connected system to be away from the synchronous safe and stable operation state, in response to $\delta_{pll} < \delta_1$ or $\delta_2 < \delta_{pll}$.

15. A computer-readable storage medium, **characterized in that** the computer-readable storage medium has stored thereon a computer program configured to perform the method for monitoring synchronous safety and stability of a renewable energy grid-connected system of any one of claims 1 to 7.

**Patentansprüche**

1. Verfahren zum Überwachen einer synchronen Sicherheit und Stabilität eines netzgekoppelten Systems für erneuerbare Energien, wobei das netzgekoppelte System für erneuerbare Energien ein Wechselstromleistungsnetz, AC-Leistungsnetz, (202) und einen Leistungsgenerator (201) für erneuerbare Energien umfasst, der mit dem AC-Leistungsnetz (202) basierend auf einem Spannungsquellenumrichter, VSC, gekoppelt ist und mit dem AC-Leistungsnetz (202) über einen Phasenregelkreis, PLL, in dem VSC synchron in Betrieb ist, das Verfahren umfassend:

Erfassen (101), als Reaktion auf einen Ausfall des netzgekoppelten Systems für erneuerbare Energien, einer generatorseitigen Spannung des Leistungsgenerators (201) für erneuerbare Energien, einer AC-Busspannung, einer Spannung des AC-Leistungsnetzes (202) und einer Stromeingabe in den Leistungsgenerator (201) für erneuerbare Energien;

Bestimmen (102), gemäß der generatorseitigen Spannung, eines relativen phasenstarren Winkels in Echtzeit des netzgekoppelten Systems für erneuerbare Energien basierend auf einer vorab festgelegten Steuerlogik für den PLL;

Bestimmen (103), gemäß der Spannung des AC-Leistungsnetzes (202) und der Stromeingabe in den Leistungsgenerator (201) für erneuerbare Energien, eines synchronen betriebsfähigen Bereichs des netzgekoppelten Systems für erneuerbare Energien basierend auf einer vorab festgelegten Steuerlogik für die generatorseitige Spannung des Leistungsgenerators (201) für erneuerbare Energien;

Bestimmen (104) einer Überspannungsbeschränkung des netzgekoppelten Systems für erneuerbare Energien gemäß der generatorseitigen Spannung, einem voreingestellten Festwert für einen generatorseitigen Überspannungsschutz, der AC-Busspannung und einem voreingestellten Grenzwert für eine AC-Busüberspannungsisolierung;

**gekennzeichnet durch:**

Bestimmen (105), gemäß der Überspannungsbeschränkung und der Spannung des AC-Leistungsnetzes (202), einer Sicherheitsbegrenzung eines relativen phasenstarren Winkels des netzgekoppelten Systems für erneuerbare Energien basierend auf der Überspannungsbeschränkung;

Bestimmen (106), gemäß dem synchronen betriebsfähigen Bereich des netzgekoppelten Systems für erneuerbare Energien und der Sicherheitsbegrenzung des relativen phasenstarren Winkels des netzgekoppelten Systems für erneuerbare Energien basierend auf der Überspannungsbeschränkung, eines betriebsfähigen Bereichs des relativen phasenstarren Winkels des netzgekoppelten Systems für erneuerbare Energien basierend auf der Überspannungsbeschränkung; und

Generieren (107), gemäß dem relativen phasenstarren Winkel in Echtzeit und dem betriebsfähigen Bereich des relativen phasenstarren Winkels, von Frühwarninformationen der synchronen Sicherheit und Stabilität des netzgekoppelten Systems für erneuerbare Energien.

2. Verfahren nach Anspruch 1, wobei das Bestimmen (102), gemäß der generatorseitigen Spannung, des relativen phasenstarren Winkels in Echtzeit des netzgekoppelten Systems für erneuerbare Energien basierend auf der vorab festgelegten Steuerlogik für den PLL umfasst:

Einführen der generatorseitigen Spannung in die vorab festgelegte Steuerlogik für den PLL, um einen phasenstarren Winkel des netzgekoppelten Systems für erneuerbare Energien zu berechnen, wobei die Steuerlogik für den PLL ausgedrückt wird als:

$$\begin{cases} \dot{\theta}_{pll} = k_{p\_pll} \, \dot{x}_{pll} + k_{i\_pll} x_{pll} \\ x_{pll} = u_r^q \end{cases} \quad (1),$$

wobei $u_r$ die generatorseitige Spannung des Leistungsgenerators (201) für erneuerbare Energien ist, $u_r^q$ eine q-Achsenkomponente der generatorseitigen Spannung des Leistungsgenerators (201) für erneuerbare Energien ist, $\theta_{pll}$ der phasenstarre Winkel des netzgekoppelten Systems für erneuerbare Energien ist, $\theta_{pll}$ eine erste Ableitung des berechneten phasenstarren Winkels ist, $k_{p\_pll}$ und $k_{i\_pll}$ Proportional-Integral-Steuerparameter, PID-Parameter, des PLL sind, $x_{pll}$ eine eingeführte Zwischenvariable ist und $\dot{x}_{pll}$ eine erste Ableitung der berechneten Zwischenvariablen ist; und

Einführen des phasenstarren Winkels des netzgekoppelten Systems für erneuerbare Energien in eine Formel zum Berechnen des relativen phasenstarren Winkels in Echtzeit, um den relativen phasenstarren Winkel in Echtzeit des netzgekoppelten Systems für erneuerbare Energien zu bestimmen, wobei die Formel zum Berechnen des relativen phasenstarren Winkels in Echtzeit ausgedrückt wird als:

$$\delta_{pll} = \theta_{pll} - \omega_g t \quad (2),$$

wobei $\delta_{pll}$ der relative phasenstarre Winkel in Echtzeit des netzgekoppelten Systems für erneuerbare Energien ist, $\omega_g$ eine Winkelfrequenz einer Spannung $u_g$ des AC-Leistungsnetzes (202) ist, $t$ eine Zeitvariable ist.

3. Verfahren nach Anspruch 1 oder 2, wobei das Bestimmen (103), gemäß der Spannung des AC-Leistungsnetzes (202) und der Stromeingabe in den Leistungsgenerator (201) für erneuerbare Energien, des synchronen betriebsfähigen Bereichs des netzgekoppelten Systems für erneuerbare Energien basierend auf der vorab festgelegten Steuerlogik für die generatorseitige Spannung des Leistungsgenerators (201) für erneuerbare Energien umfasst:

Bestimmen einer Formel zum Berechnen eines stabilen Gleichgewichtspunkts basierend auf der vorab festgelegten Steuerlogik für die generatorseitige Spannung des Leistungsgenerators (201) für erneuerbare Energien, wobei die Steuerlogik für die generatorseitige Spannung des Leistungsgenerators (201) für erneuerbare Energien ausgedrückt wird als:

$$\begin{cases} u_r^d = u_g^d + i_c^q(\omega_{pll} L_\Sigma) \\ u_r^q = -u_g^q - i_c^d(\omega_{pll} L_\Sigma) \end{cases} \quad (3),$$

wobei $i_c$ die Stromeingabe in den Leistungsgenerator (201) für erneuerbare Energien ist, $u_r$ und $u_g$ die generatorseitige Spannung des Leistungsgenerators (201) für erneuerbare Energien beziehungsweise die Spannung des AC-Leistungsnetzes (202) sind, $u_r^d$ und $u_r^q$ eine d-Achsenkomponente beziehungsweise eine q-Achsenkomponente der generatorseitigen Spannung des Leistungsgenerators (201) für erneuerbare Energien sind, $u_g^d$ und $u_g^q$ eine d-Achsenkomponente beziehungsweise eine q-Achsenkomponente der Spannung des AC-Leistungsnetzes (202) sind, $i_c^d$ und $i_c^q$ eine d-Achsenkomponente beziehungsweise eine q-Achsenkomponente der Stromeingabe in den Leistungsgenerator (201) für erneuerbare Energien sind, $L_r$ und $L_g$ eine Schaltungsinduktivität beziehungsweise eine Thevenin-Ersatzinduktivität des AC-Leistungsnetzes (202) sind, $L_\Sigma$ eine netzgekoppelte Induktivität ist und als $L_\Sigma = L_r + L_g$ ausgedrückt wird und $\omega_{pll}$ eine Winkelfrequenz von PLL ist;

als Reaktion auf $u_r^q = 0$ in Formel (3), Erhalten der Formel zum Berechnen des stabilen Gleichgewichtspunkts, die ausgedrückt wird als:

$$-\omega_{pll} L_\Sigma i_c^d - U_g \sin \delta_{pll} = 0 \quad (4),$$

wobei $U_g$ eine Amplitude der Spannung des AC-Leistungsnetzes (202) ist; und
Bestimmen, durch Lösen von Formel (4), des synchronen betriebsfähigen Bereichs des netzgekoppelten Systems für erneuerbare Energien als $[\delta_{UEP1}, \delta_{UEP2}]$, wobei

$$\delta_{UEP1} = -180° - \arcsin(\omega_{pll} * L_\Sigma * i_c^d / U_g), \delta_{UEP2} = 180° - \arcsin(\omega_{pll} * L_\Sigma * i_c^d / U_g).$$

4. Verfahren nach einem der Ansprüche 1 bis 3, wobei das Bestimmen (104) der Überspannungsbeschränkung des netzgekoppelten Systems für erneuerbare Energien gemäß der generatorseitigen Spannung, dem voreingestellten Festwert für den generatorseitigen Überspannungsschutz, der AC-Busspannung und dem voreingestellten Grenzwert für die AC-Busüberspannungsisolierung umfasst:

Vergleichen einer Amplitude $U_r$ der generatorseitigen Spannung mit dem voreingestellten Festwert $U_{rN}$ für den generatorseitigen Überspannungsschutz und Vergleichen einer Amplitude $U_s$ der AC-Busspannung mit dem voreingestellten Grenzwert $U_{sN}$ für die Busüberspannungsisolierung,
wobei bestimmt wird, dass die Überspannungsbeschränkung des netzgekoppelten Systems für erneuerbare Energien durch die Amplitude $U_r$ der generatorseitigen Spannung des Leistungsgenerators (201) für erneuerbare Energien dominiert wird, als Reaktion darauf, dass nur die Amplitude $U_r$ der generatorseitigen Spannung nicht kleiner als der Festwert $U_{rN}$ für den generatorseitigen Überspannungsschutz ist,
bestimmt wird, dass die Überspannungsbeschränkung des netzgekoppelten Systems für erneuerbare Energien durch die Amplitude $U_s$ der AC-Busspannung dominiert wird, als Reaktion darauf, dass nur die Amplitude $U_s$ der AC-Busspannung nicht kleiner als der Grenzwert $U_{sN}$ für die Busüberspannungsisolierung ist, und
bestimmt wird, dass die Überspannungsbeschränkung des netzgekoppelten Systems für erneuerbare Energien durch die Amplitude $U_r$ der generatorseitigen Spannung des Leistungsgenerators (201) für erneuerbare Energien und die Amplitude $U_s$ der AC-Busspannung dominiert wird, als Reaktion darauf, dass die Amplitude $U_r$ der

generatorseitigen Spannung nicht kleiner als der Festwert $U_{rN}$ des generatorseitigen Überspannungsschutzes ist und die Amplitude $U_s$ der AC-Busspannung nicht kleiner als der Grenzwert $U_{sN}$ der Busüberspannungsisolierung ist.

5. Verfahren nach Anspruch 4, wobei das Bestimmen (105), gemäß der Überspannungsbeschränkung und der Spannung des AC-Leistungsnetzes (202), der Sicherheitsbegrenzung des relativen phasenstarren Winkels des netzgekoppelten Systems für erneuerbare Energien basierend auf der Überspannungsbeschränkung umfasst:

als Reaktion darauf, dass die Überspannungsbeschränkung des netzgekoppelten Systems für erneuerbare Energien durch die Amplitude $U_r$ der generatorseitigen Spannung des Leistungsgenerators (201) für erneuerbare Energien dominiert wird, Berechnen der Sicherheitsbegrenzung $\delta_{DOC1}$ des relativen phasenstarren Winkels des netzgekoppelten Systems für erneuerbare Energien unter der Überspannungsbeschränkung davon durch:

$$\delta_{DOC1} = -\arccos\left\{\frac{1}{2}\frac{U_{rN}^2}{\omega_{pll}L_\sim}\left(\frac{U_g}{\omega_{pll}L_\sim} + \frac{\omega_{pll}L_\sim}{U_g}\right) + U_{rN}^2\sin\delta_0\right\} \quad (5),$$

wobei $\delta_0$ ein relativer phasenstarrer Winkel des netzgekoppelten Systems für erneuerbare Energien in einem Nennbetriebszustand ist;
als Reaktion darauf, dass die Überspannungsbeschränkung des netzgekoppelten Systems für erneuerbare Energien durch die Amplitude $U_s$ der AC-Busspannung dominiert wird, Berechnen der Sicherheitsbegrenzung $\delta_{DOC1}$ des relativen phasenstarren Winkels des netzgekoppelten Systems für erneuerbare Energien unter der Überspannungsbeschränkung davon durch:

$$\delta_{DOC1} = -\arccos\left\{\frac{1-U_{sN}^2}{2}\left(\frac{U_g}{\omega_{pll}L_\sim} + \frac{\omega_{pll}L_\sim}{U_g}\right) + U_{sN}^2\sin\delta_0\right\} \quad (6);$$

und
als Reaktion darauf, dass die Überspannungsbeschränkung des netzgekoppelten Systems für erneuerbare Energien durch die Amplitude $U_r$ der generatorseitigen Spannung des Leistungsgenerators (201) für erneuerbare Energien und die Amplitude $U_s$ der AC-Busspannung dominiert wird, Bestimmen der Sicherheitsbegrenzung $\delta_{DOC1}$ des relativen phasenstarren Winkels des netzgekoppelten Systems für erneuerbare Energien unter Beschränkungen der Amplitude $U_r$ der generatorseitigen Spannung und der Amplitude $U_s$ der AC-Busspannung als: die Sicherheitsbegrenzung des relativen phasenstarren Winkels des netzgekoppelten Systems für erneuerbare Energien unter der Beschränkung der Amplitude $U_r$ der generatorseitigen Spannung, die gemäß Formel (5) bestimmt wird, oder die Sicherheitsbegrenzung des relativen phasenstarren Winkels des netzgekoppelten Systems für erneuerbare Energien unter der Beschränkung der Amplitude $U_s$ der AC-Busspannung, die gemäß Formel (6) bestimmt wird.

6. Verfahren nach einem der Ansprüche 1 bis 5, wobei das Bestimmen (106), gemäß dem synchronen betriebsfähigen Bereich des netzgekoppelten Systems für erneuerbare Energien und der Sicherheitsbegrenzung des relativen phasenstarren Winkels des netzgekoppelten Systems für erneuerbare Energien basierend auf der Überspannungsbeschränkung, des betriebsfähigen Bereichs des relativen phasenstarren Winkels des netzgekoppelten Systems für erneuerbare Energien basierend auf der Überspannungsbeschränkung umfasst:

Vergleichen eines oberen Grenzwerts $\delta_{UEP1}$ beziehungsweise eines unteren Grenzwerts $\delta_{UEP2}$ des synchronen betriebsfähigen Bereichs $[\delta_{UEP1}, \delta_{UEP2}]$ des netzgekoppelten Systems für erneuerbare Energien mit der Sicherheitsbegrenzung $\delta_{DOC1}$ des relativen phasenstarren Winkels;
Bestimmen des betriebsfähigen Bereichs des relativen phasenstarren Winkels des netzgekoppelten Systems für erneuerbare Energien basierend auf der Überspannungsbeschränkung als $[\delta_{DOC1}, \delta_{UEP2}]$, als Reaktion auf $\delta_{UEP1} \leq \delta_{DOC1} \leq \delta_{UEP2}$; und
Bestimmen des betriebsfähigen Bereichs des relativen phasenstarren Winkels des netzgekoppelten Systems für erneuerbare Energien basierend auf der Überspannungsbeschränkung als $[\delta_{UEP1}, \delta_{UEP2}]$, als Reaktion auf

$\delta_{DOC1} < \delta_{UEP1}$ oder $\delta_{DOC1} < \delta_{UEP2}$.

7. Verfahren nach einem der Ansprüche 1 bis 6, wobei das Generieren (107), gemäß dem relativen phasenstarren Winkel in Echtzeit und dem betriebsfähigen Bereich des relativen phasenstarren Winkels, von Frühwarninformationen der synchronen Sicherheit und Stabilität des netzgekoppelten Systems für erneuerbare Energien umfasst:

   Bestimmen, dass sich das netzgekoppelte System für erneuerbare Energien in einem synchronen sicheren und stabilen Betriebszustand befindet, als Reaktion auf $\delta_1 < \delta_{pll} < \delta_2$, wobei $\delta_1$ und $\delta_2$ ein oberer Grenzwert beziehungsweise ein unterer Grenzwert des betriebsfähigen Bereichs des relativen phasenstarren Winkels des netzgekoppelten Systems für erneuerbare Energien sind; und
   Bestimmen, dass sich das netzgekoppelte System für erneuerbare Energien entfernt von dem synchronen sicheren und stabilen Betriebszustand befindet, als Reaktion auf $\delta_{pll} < \delta_1$ oder $\delta_2 < \delta_{pll}$.

8. Einrichtung zum Überwachen der synchronen Sicherheit und Stabilität eines netzgekoppelten Systems für erneuerbare Energien, wobei das netzgekoppelte System für erneuerbare Energien ein Wechselstromleistungsnetz, AC-Leistungsnetz, (202) und einen Leistungsgenerator (201) für erneuerbare Energien umfasst, der mit dem AC-Leistungsnetz (202) basierend auf einem Spannungsquellenumrichter, VSC, gekoppelt und konfiguriert ist, um über einen Phasenregelkreis, PLL, in dem VSC mit dem AC-Leistungsnetz (202) synchron in Betrieb zu sein, die Einrichtung umfassend:

   ein Datenerfassungsteil (501), das konfiguriert ist, um, als Reaktion auf den Ausfall des netzgekoppelten Systems für erneuerbare Energien, eine generatorseitige Spannung des Leistungsgenerators (201) für erneuerbare Energien, eine AC-Busspannung, eine Spannung des AC-Leistungsnetzes (202) und eine Stromeingabe in den Leistungsgenerator (201) für erneuerbare Energien zu erfassen;
   ein erstes Bestimmungsteil (502), das konfiguriert ist, um, gemäß der generatorseitigen Spannung, einen relativen phasenstarren Winkel in Echtzeit des netzgekoppelten Systems für erneuerbare Energien basierend auf einer vorab festgelegten Steuerlogik für den PLL zu bestimmen;
   ein zweites Bestimmungsteil (503), das konfiguriert ist, um, gemäß der Spannung des AC-Leistungsnetzes (202) und der Stromeingabe in den Leistungsgenerator (201) für erneuerbare Energien, einen synchronen betriebsfähigen Bereich des netzgekoppelten Systems für erneuerbare Energien basierend auf einer vorab festgelegten Steuerlogik für die generatorseitige Spannung des Leistungsgenerators (201) für erneuerbare Energien zu bestimmen;
   ein dominantes Beschränkungsteil (504), das konfiguriert ist, um eine Überspannungsbeschränkung des netzgekoppelten Systems für erneuerbare Energien gemäß der generatorseitigen Spannung, einem voreingestellten Festwert für den generatorseitigen Überspannungsschutz, der AC-Busspannung und einem voreingestellten Grenzwert für die AC-Busüberspannungsisolierung zu bestimmen;
   **gekennzeichnet durch:**

   ein drittes Bestimmungsteil (505), das konfiguriert ist, um, gemäß der Überspannungsbeschränkung und der Spannung des AC-Leistungsnetzes (202), eine Sicherheitsbegrenzung des relativen phasenstarren Winkels des netzgekoppelten Systems für erneuerbare Energien basierend auf der Überspannungsbeschränkung zu bestimmen;
   ein viertes Bestimmungsteil (506), das konfiguriert ist, um, gemäß dem synchronen betriebsfähigen Bereich des netzgekoppelten Systems für erneuerbare Energien und der Sicherheitsbegrenzung des relativen phasenstarren Winkels des netzgekoppelten Systems für erneuerbare Energien basierend auf der Überspannungsbeschränkung, einen betriebsfähigen Bereich des relativen phasenstarren Winkels des netzgekoppelten Systems für erneuerbare Energien basierend auf der Überspannungsbeschränkung zu bestimmen; und
   ein Sicherheitsfrühwarnteil (507), das konfiguriert ist, um, gemäß dem relativen phasenstarren Winkel in Echtzeit und dem betriebsfähigen Bereich des relativen phasenstarren Winkels, Frühwarninformationen der synchronen Sicherheit und Stabilität des netzgekoppelten Systems für erneuerbare Energien zu generieren.

9. Einrichtung nach Anspruch 1, wobei das erste Bestimmungsteil (502) ferner konfiguriert ist zum:

   Einführen der generatorseitigen Spannung in die vorab festgelegte Steuerlogik für den PLL, um einen phasenstarren Winkel des netzgekoppelten Systems für erneuerbare Energien zu berechnen, wobei die Steuerlogik für den PLL ausgedrückt wird als:

$$\begin{cases} \overline{\theta}_{\text{pll}} = k_{\text{p\_pll}} \, \overline{x}_{\text{pll}} + k_{\text{i\_pll}} x_{\text{pll}} \\ \overline{x}_{\text{pll}} = u_{\text{r}}^{\text{q}} \end{cases} \quad (1),$$

wobei $u_{\text{r}}$ die generatorseitige Spannung des Leistungsgenerators (201) für erneuerbare Energien ist, $u_{\text{r}}^{\text{q}}$ eine q-Achsenkomponente der generatorseitigen Spannung des Leistungsgenerators (201) für erneuerbare Energien ist, $\theta_{\text{pll}}$ der phasenstarre Winkel des netzgekoppelten Systems für erneuerbare Energien ist, $\theta_{\text{pll}}$ eine erste Ableitung des berechneten phasenstarren Winkels ist, $k_{\text{p\_pll}}$ und $k_{\text{i\_pll}}$ Proportional-Integral-Steuerparameter, PID-Parameter, des PLL sind, $x_{\text{pll}}$ eine eingeführte Zwischenvariable ist und $x_{\text{pll}}$ eine erste Ableitung der berechneten Zwischenvariablen ist; und

Einführen des phasenstarren Winkels des netzgekoppelten Systems für erneuerbare Energien in eine Formel zum Berechnen des relativen phasenstarren Winkels in Echtzeit, um den relativen phasenstarren Winkel in Echtzeit des netzgekoppelten Systems für erneuerbare Energien zu bestimmen, wobei die Formel zum Berechnen des relativen phasenstarren Winkels in Echtzeit ausgedrückt wird als:

$$\delta_{\text{pll}} = \theta_{\text{pll}} - \omega_{\text{g}} t \quad (2),$$

wobei $\delta_{\text{pll}}$ der relative phasenstarre Winkel in Echtzeit des netzgekoppelten Systems für erneuerbare Energien ist, $\omega_{\text{g}}$ eine Winkelfrequenz einer Spannung $u_{\text{g}}$ des AC-Leistungsnetzes (202) ist, $t$ eine Zeitvariable ist.

**10.** Einrichtung nach Anspruch 8 oder 9, wobei das zweite Bestimmungsteil (503) ferner konfiguriert ist zum:

Bestimmen einer Formel zum Berechnen eines stabilen Gleichgewichtspunkts basierend auf der vorab festgelegten Steuerlogik für die generatorseitige Spannung des Leistungsgenerators (201) für erneuerbare Energien, wobei die Steuerlogik für die generatorseitige Spannung des Leistungsgenerators (201) für erneuerbare Energien ausgedrückt wird als:

$$\begin{cases} u_{\text{r}}^{\text{d}} = u_{g}^{\text{d}} + i_{\text{c}}^{\text{q}} (\omega_{\text{pll}} L_{\Sigma}) \\ u_{\text{r}}^{\text{q}} = -u_{g}^{\text{q}} - i_{\text{c}}^{\text{d}} (\omega_{\text{pll}} L_{\Sigma}) \end{cases} \quad (3),$$

wobei $i_{\text{c}}$ die Stromeingabe in den Leistungsgenerator (201) für erneuerbare Energien ist, $u_{\text{r}}$ und $u_{g}$ die generatorseitige Spannung des Leistungsgenerators (201) für erneuerbare Energien beziehungsweise die Spannung des AC-Leistungsnetzes (202) sind, $u_{\text{r}}^{\text{d}}$ und $u_{\text{r}}^{\text{q}}$ eine d-Achsenkomponente beziehungsweise eine q-Achsenkomponente der generatorseitigen Spannung des Leistungsgenerators (201) für erneuerbare Energien sind, $u_{g}^{\text{d}}$ und $u_{g}^{\text{q}}$ eine d-Achsenkomponente beziehungsweise eine q-Achsenkomponente der Spannung des AC-Leistungsnetzes (202) sind, $i_{\text{c}}^{\text{d}}$ und $i_{\text{c}}^{\text{q}}$ eine d-Achsenkomponente beziehungsweise eine q-Achsenkomponente der Stromeingabe in den Leistungsgenerator (201) für erneuerbare Energien sind, $L_{\text{r}}$ und $L_{g}$ eine Schaltungsinduktivität beziehungsweise eine Thevenin-Ersatzinduktivität des AC-Leistungsnetzes (202) sind, $L_{\Sigma}$ eine netzgekoppelte Induktivität ist und als $L_{\Sigma} = L_{\text{r}} + L_{g}$ ausgedrückt wird und $\omega_{\text{pll}}$ eine Winkelfrequenz von PLL ist;

als Reaktion auf $u_{\text{r}}^{\text{q}} = 0$ in Formel (3), Erhalten der Formel zum Berechnen des stabilen Gleichgewichtspunkts, die ausgedrückt wird als:

$$-\omega_{\text{pll}} L_{\Sigma} i_{\text{c}}^{\text{d}} - U_{\text{g}} \sin \delta_{\text{pll}} = 0 \quad (4),$$

wobei $U_{\text{g}}$ eine Amplitude der Spannung des AC-Leistungsnetzes (202) ist; und

Bestimmen, durch Lösen von Formel (4), des synchronen betriebsfähigen Bereichs des netzgekoppelten Systems für erneuerbare Energien als $[\delta_{\text{UEP1}}, \delta_{\text{UEP2}}]$, wobei

$$\delta_{\text{UEP1}} = -180° - \arcsin(\omega_{\text{p}} * L_{\sim} * i_{\text{c}}^{\text{d}} / U_{\text{g}}), \delta_{\text{UEP2}} = 180° - \arcsin(\omega_{\text{p}} * L_{\sim} * i_{\text{c}}^{\text{d}} / U_{\text{g}}).$$

**11.** Einrichtung nach einem der Ansprüche 8 bis 10, wobei das dominante Beschränkungsteil (504) ferner konfiguriert ist zum:

Vergleichen einer Amplitude $U_r$ der generatorseitigen Spannung mit dem voreingestellten Festwert $U_{rN}$ für den generatorseitigen Überspannungsschutz und Vergleichen einer Amplitude $U_s$ der AC-Busspannung mit dem voreingestellten Grenzwert $U_{sN}$ für die Busüberspannungsisolierung,

wobei bestimmt wird, dass die Überspannungsbeschränkung des netzgekoppelten Systems für erneuerbare Energien durch die Amplitude $U_r$ der generatorseitigen Spannung des Leistungsgenerators (201) für erneuerbare Energien dominiert wird, als Reaktion darauf, dass nur die Amplitude $U_r$ der generatorseitigen Spannung nicht kleiner als der Festwert $U_{rN}$ für den generatorseitigen Überspannungsschutz ist,

bestimmt wird, dass die Überspannungsbeschränkung des netzgekoppelten Systems für erneuerbare Energien durch die Amplitude $U_s$ der AC-Busspannung dominiert wird, als Reaktion darauf, dass nur die Amplitude $U_s$ der AC-Busspannung nicht kleiner als der Grenzwert $U_{sN}$ für die Busüberspannungsisolierung ist, und

bestimmt wird, dass die Überspannungsbeschränkung des netzgekoppelten Systems für erneuerbare Energien durch die Amplitude $U_r$ der generatorseitigen Spannung des Leistungsgenerators (201) für erneuerbare Energien und die Amplitude $U_s$ der AC-Busspannung dominiert wird, als Reaktion darauf, dass die Amplitude $U_r$ der generatorseitigen Spannung nicht kleiner als der Festwert $U_{rN}$ des generatorseitigen Überspannungsschutzes ist und die Amplitude $U_s$ der AC-Busspannung nicht kleiner als der Grenzwert $U_{sN}$ der Busüberspannungsisolierung ist.

**12.** Einrichtung nach Anspruch 11, wobei das dritte Bestimmungsteil (505) ferner konfiguriert ist zum:

als Reaktion darauf, dass die Überspannungsbeschränkung des netzgekoppelten Systems für erneuerbare Energien durch die Amplitude $U_r$ der generatorseitigen Spannung des Leistungsgenerators (201) für erneuerbare Energien dominiert wird, Berechnen der Sicherheitsbegrenzung $\delta_{\text{DOC1}}$ des relativen phasenstarren Winkels des netzgekoppelten Systems für erneuerbare Energien unter der Überspannungsbeschränkung davon durch:

$$\delta_{\text{DOC1}} = -\arccos\left\{\frac{1-U_{rN}^2}{2}\left(\frac{U_g}{\omega_{\text{pll}}L_{\sim}} + \frac{\omega_{\text{pll}}L_{\sim}}{U_g}\right) + U_{rN}^2\sin\delta_0\right\} \quad (5),$$

wobei $\delta_0$ ein relativer phasenstarrer Winkel des netzgekoppelten Systems für erneuerbare Energien in einem Nennbetriebszustand ist;

als Reaktion darauf, dass die Überspannungsbeschränkung des netzgekoppelten Systems für erneuerbare Energien durch die Amplitude $U_s$ der AC-Busspannung dominiert wird, Berechnen der Sicherheitsbegrenzung $\delta_{\text{DOC1}}$ des relativen phasenstarren Winkels des netzgekoppelten Systems für erneuerbare Energien unter der Überspannungsbeschränkung davon durch:

$$\delta_{\text{DOC1}} = -\arccos\left\{\frac{1-U_{sN}^2}{2}\left(\frac{U_g}{\omega_{\text{pll}}L_{\sim}} + \frac{\omega_{\text{pll}}L_{\sim}}{U_g}\right) + U_{sN}^2\sin\delta_0\right\} \quad (6);$$

und

als Reaktion darauf, dass die Überspannungsbeschränkung des netzgekoppelten Systems für erneuerbare Energien durch die Amplitude $U_r$ der generatorseitigen Spannung des Leistungsgenerators (201) für erneuerbare Energien und die Amplitude $U_s$ der AC-Busspannung dominiert wird, Bestimmen der Sicherheitsbegrenzung $\delta_{\text{DOC1}}$ des relativen phasenstarren Winkels des netzgekoppelten Systems für erneuerbare Energien unter Beschränkungen der Amplitude $U_r$ der generatorseitigen Spannung und der Amplitude $U_s$ der AC-Busspannung als: die Sicherheitsbegrenzung des relativen phasenstarren Winkels des netzgekoppelten Systems für erneuerbare Energien unter der Beschränkung der Amplitude $U_r$ der generatorseitigen Spannung, die gemäß Formel (5) bestimmt wird, oder die Sicherheitsbegrenzung des relativen phasenstarren Winkels des netzgekoppelten Systems für erneuerbare Energien unter der Beschränkung der Amplitude $U_s$ der AC-Busspannung, die gemäß Formel (6) bestimmt wird.

13. Einrichtung nach einem der Ansprüche 8 bis 12, wobei das vierte Bestimmungsteil (506) ferner konfiguriert ist zum:

Vergleichen eines oberen Grenzwerts $\delta_{UEP1}$ beziehungsweise eines unteren Grenzwerts $\delta_{UEP2}$ des synchronen betriebsfähigen Bereichs [$\delta_{UEP1}$, $\delta_{UEP2}$] des netzgekoppelten Systems für erneuerbare Energien mit der Sicherheitsbegrenzung $\delta_{DOC1}$ des relativen phasenstarren Winkels;
Bestimmen des betriebsfähigen Bereichs des relativen phasenstarren Winkels des netzgekoppelten Systems für erneuerbare Energien basierend auf der Überspannungsbeschränkung als [$\delta_{DOC1}$, $\delta_{UEP2}$], als Reaktion auf $\delta_{UEP1} \leq \delta_{DOC1} \leq \delta_{UEP2}$; und
Bestimmen des betriebsfähigen Bereichs des relativen phasenstarren Winkels des netzgekoppelten Systems für erneuerbare Energien basierend auf der Überspannungsbeschränkung als [$\delta_{UEP1}$, $\delta_{UEP2}$], als Reaktion auf $\delta_{DOC1} < \delta_{UEP1}$ oder $\delta_{DOC1} < \delta_{UEP2}$.

14. Einrichtung nach einem der Ansprüche 8 bis 13, wobei das Sicherheitsfrühwarnteil (507) ferner konfiguriert ist zum:

Bestimmen, dass sich das netzgekoppelte System für erneuerbare Energien in einem synchronen sicheren und stabilen Betriebszustand befindet, als Reaktion auf $\delta_1 < \delta_{pll} < \delta_2$, wobei $\delta_1$ und $\delta_2$ ein oberer Grenzwert beziehungsweise ein unterer Grenzwert des betriebsfähigen Bereichs des relativen phasenstarren Winkels des netzgekoppelten Systems für erneuerbare Energien sind; und
Bestimmen, dass sich das netzgekoppelte System für erneuerbare Energien entfernt von dem synchronen sicheren und stabilen Betriebszustand befindet, als Reaktion auf $\delta_{pll} < \delta_1$ oder $\delta_2 < \delta_{pll}$.

15. Computerlesbares Speichermedium, **dadurch gekennzeichnet, dass** das computerlesbare Speichermedium ein Computerprogramm darauf gespeichert aufweist, das konfiguriert ist, um das Verfahren zum Überwachen der synchronen Sicherheit und Stabilität eines netzgekoppelten Systems für erneuerbare Energien nach einem der Ansprüche 1 bis 7 durchzuführen.

**Revendications**

1. Procédé pour la surveillance de la sécurité et de la stabilité synchrones d'un système d'énergie renouvelable connecté au réseau, le système d'énergie renouvelable connecté au réseau comprend un réseau électrique à courant alternatif, CA (202) et un générateur d'énergie renouvelable (201) connecté au réseau électrique CA (202) sur la base d'un convertisseur de source de tension, VSC, et fonctionnant de manière synchrone avec le réseau électrique CA (202) par l'intermédiaire d'une boucle à verrouillage de phase, PLL, dans le VSC, le procédé comprenant :

l'acquisition (101), en réponse à une défaillance du système d'énergie renouvelable connecté au réseau, d'une tension côté générateur du générateur d'énergie renouvelable (201), d'une tension de bus CA, d'une tension du réseau électrique CA (202) et d'une entrée de courant dans le générateur d'énergie renouvelable (201) ;
la détermination (102), en fonction de la tension côté générateur, d'un angle verrouillé en phase relatif en temps réel du système d'énergie renouvelable connecté au réseau sur la base d'une logique de commande préétablie pour la PLL ;
la détermination (103), en fonction de la tension du réseau électrique CA (202) et de l'entrée de courant dans le générateur d'énergie renouvelable (201), d'une plage fonctionnelle synchrone du système d'énergie renouvelable connecté au réseau sur la base d'une logique de commande préétablie pour la tension côté générateur du générateur d'énergie renouvelable (201) ;
la détermination (104) d'une contrainte de surtension du système d'énergie renouvelable connecté au réseau en fonction de la tension côté générateur, d'une valeur fixe prédéfinie pour la protection contre les surtensions côté générateur, de la tension de bus CA et d'une valeur limite prédéfinie pour l'isolation contre les surtensions de bus CA ;
**caractérisé par :**

la détermination (105), en fonction de la contrainte de surtension et de la tension du réseau électrique CA (202), d'une limite de sécurité d'un angle verrouillé en phase relatif du système d'énergie renouvelable connecté au réseau sur la base de la contrainte de surtension ;

la détermination (106), en fonction de la plage fonctionnelle synchrone du système d'énergie renouvelable connecté au réseau et de la limite de sécurité de l'angle verrouillé en phase relatif du système d'énergie renouvelable connecté au réseau sur la base de la contrainte de surtension, d'une plage fonctionnelle de l'angle verrouillé en phase relatif du système d'énergie renouvelable connecté au réseau sur la base de la contrainte de surtension ; et

la génération (107), en fonction de l'angle verrouillé en phase relatif en temps réel et de la plage fonctionnelle de l'angle verrouillé en phase relatif, d'informations d'alerte rapide concernant la sécurité et la stabilité synchrones du système d'énergie renouvelable connecté au réseau.

2. Procédé selon la revendication 1, dans lequel la détermination (102), en fonction de la tension côté générateur, de l'angle verrouillé en phase relatif en temps réel du système d'énergie renouvelable connecté au réseau sur la base de la logique de commande préétablie pour la PLL comprend :

l'introduction de la tension côté générateur dans la logique de commande préétablie pour la PLL, pour calculer un angle verrouillé en phase du système d'énergie renouvelable connecté au réseau, dans lequel la logique de commande pour la PLL est exprimée comme suit :

$$\begin{cases} \dot{\theta}_{\text{pll}} = k_{\text{p\_pll}} \dot{x}_{\text{pll}} + k_{\text{i\_pll}} x_{\text{pll}} \\ x_{\text{pll}} = u_1^{\text{q}} \end{cases} \quad (1),$$

où $u_\text{r}$ représente la tension côté générateur du générateur d'énergie renouvelable (201), $u_\text{r}^{\text{q}}$ représente une composante de l'axe q de la tension côté générateur du générateur d'énergie renouvelable (201), $\theta_{\text{pll}}$ représente l'angle verrouillé en phase du système d'énergie renouvelable connecté au réseau, $\theta_{\text{pll}}$ représente une dérivée première de l'angle verrouillé en phase calculé, $k_{\text{p\_pll}}$ et $k_{\text{i\_pll}}$ représentent des paramètres de commande proportionnelle intégrale, PID, de la PLL, $x_{\text{pll}}$ représente une variable intermédiaire introduite, et $\dot{x}_{\text{p.1}}$ représente une dérivée première de la variable intermédiaire calculée ; et

l'introduction de l'angle verrouillé en phase du système d'énergie renouvelable connecté au réseau dans une formule de calcul de l'angle verrouillé en phase relatif en temps réel, pour déterminer l'angle verrouillé en phase relatif en temps réel du système d'énergie renouvelable connecté au réseau, dans lequel la formule de calcul de l'angle verrouillé en phase relatif en temps réel est exprimée comme suit :

$$\delta_{\text{pll}} = \theta_{\text{pll}} - \omega_{\text{g}} t \quad (2),$$

où $\delta_{\text{pll}}$ représente l'angle verrouillé en phase relatif en temps réel du système d'énergie renouvelable connecté au réseau, $\omega_{\text{g}}$ représente une fréquence angulaire d'une tension $u_{\text{g}}$ du réseau électrique CA (202), t représente une variable temporelle.

3. Procédé selon la revendication 1 ou 2, dans lequel la détermination (103), en fonction de la tension du réseau électrique CA (202) et de l'entrée de courant dans le générateur d'énergie renouvelable (201), de la plage fonctionnelle synchrone du système d'énergie renouvelable connecté au réseau sur la base de la logique de commande préétablie pour la tension côté générateur du générateur d'énergie renouvelable (201) comprend :

la détermination d'une formule de calcul d'un point d'équilibre stable sur la base de la logique de commande préétablie pour la tension côté générateur du générateur d'énergie renouvelable (201), dans lequel la logique de commande pour la tension côté générateur du générateur d'énergie renouvelable (201) est exprimée comme suit :

$$\begin{cases} u_\text{r}^{\text{d}} = u_g^{\text{d}} + i_\text{c}^{\text{q}}(\omega_{\text{pll}} L_\Sigma) \\ u_\text{r}^{\text{q}} = -u_g^{\text{q}} - i_\text{c}^{\text{d}}(\omega_{\text{pll}} L_\Sigma) \end{cases} \quad (3),$$

où $i_c$ représente l'entrée de courant dans le générateur d'énergie renouvelable (201), $u_r$ et $u_g$ représentent respectivement la tension côté générateur du générateur d'énergie renouvelable (201) et la tension du réseau électrique CA (202), $u_r^d$ et $u_r^q$ représentent respectivement une composante de l'axe d et une composante de l'axe q de la tension côté générateur du générateur d'énergie renouvelable (201), $u_g^d$ et $u_g^q$ représentent respectivement une composante de l'axe d et une composante de l'axe q de la tension du réseau électrique CA (202), $i_c^d$ et $i_c^q$ représentent respectivement une composante de l'axe d et une composante de l'axe q de l'entrée de courant dans le générateur d'énergie renouvelable (201), $L_r$ et $L_g$ représentent respectivement une inductance de circuit et une inductance équivalente de Thevenin du réseau électrique CA (202), $L_\Sigma$ représente une inductance connectée au réseau et est exprimé en tant que $L_\Sigma = L_r + L_g$, et $\omega_{pll}$ représente une fréquence angulaire de la PLL ;

en réponse à $u_r^q = 0$ dans la formule (3), l'obtention de la formule de calcul du point d'équilibre stable, qui est exprimée comme suit :

$$-\omega_{pll} L_\Sigma i_c^d - U_g \sin \delta_{pll} = 0 \ (4),$$

où $U_g$ représente une amplitude de la tension du réseau électrique CA (202) ; et
la détermination, en résolvant la formule (4), de la plage fonctionnelle synchrone du système d'énergie renouvelable connecté au réseau en tant que $[\delta_{UEP1}, \delta_{UEP2}]$, où

$$\delta_{UEP1} = -180° - \arcsin(\omega_{pll} * L_\Sigma * i_c^d / U_g), \ \delta_{UEP2} = -180° - \arcsin(\omega_{pll} * L_\Sigma * i_c^d / U_g).$$

4.  Procédé selon l'une quelconque des revendications 1 à 3, dans lequel la détermination (104) de la contrainte de surtension du système d'énergie renouvelable connecté au réseau en fonction de la tension côté générateur, de la valeur fixe prédéfinie pour la protection contre les surtensions côté générateur, de la tension de bus CA et de la valeur limite prédéfinie pour l'isolation contre les surtensions de bus CA comprend :

    la comparaison d'une amplitude $U_r$ de la tension côté générateur avec la valeur fixe prédéfinie $U_{rN}$ pour la protection contre les surtensions côté générateur, et la comparaison d'une amplitude $U_s$ de la tension de bus CA avec la valeur limite prédéfinie $U_{sN}$ pour l'isolation contre les surtensions de bus,
    dans lequel la contrainte de surtension du système d'énergie renouvelable connecté au réseau est déterminée comme étant dominée par l'amplitude $U_r$ de la tension côté générateur du générateur d'énergie renouvelable (201), en réponse au fait que seule l'amplitude $U_r$ de la tension côté générateur n'est pas inférieure à la valeur fixe $U_{rN}$ pour la protection contre les surtensions côté générateur,
    la contrainte de surtension du système d'énergie renouvelable connecté au réseau est déterminée comme étant dominée par l'amplitude $U_s$ de la tension de bus CA, en réponse au fait que seule l'amplitude $U_s$ de la tension de bus CA n'est pas inférieure à la valeur limite $U_{sN}$ pour l'isolation contre les surtensions de bus, et
    la contrainte de surtension du système d'énergie renouvelable connecté au réseau est déterminée comme étant dominée par l'amplitude $U_r$ de la tension côté générateur du générateur d'énergie renouvelable (201) et l'amplitude $U_s$ de la tension de bus CA, en réponse au fait que l'amplitude $U_r$ de la tension côté générateur n'est pas inférieure à la valeur fixe $U_{rN}$ de la protection contre les surtensions côté générateur et que l'amplitude $U_s$ de la tension de bus CA n'est pas inférieure à la valeur limite $U_{sN}$ de l'isolation contre les surtensions de bus.

5.  Procédé selon la revendication 4, dans lequel la détermination (105), en fonction de la contrainte de surtension et de la tension du réseau électrique CA (202), de la limite de sécurité de l'angle verrouillé en phase relatif du système d'énergie renouvelable connecté au réseau sur la base de la contrainte de surtension comprend :

    en réponse au fait que la contrainte de surtension du système d'énergie renouvelable connecté au réseau est dominée par l'amplitude $U_r$ de la tension côté générateur du générateur d'énergie renouvelable (201), le calcul de la limite de sécurité $\delta_{DOC1}$ de l'angle verrouillé en phase relatif du système d'énergie renouvelable connecté au réseau sous la contrainte de surtension de celui-ci avec :

$$\delta_{DOC1} = -\arccos\left\{\frac{1}{2}\,U_{rN}^2\left(\frac{U_g}{\omega_{pll}L_\Sigma} + \frac{\omega_{pll}L_\Sigma}{U_g}\right) + U_{rN}^2\sin\delta_0\right\} \quad (5),$$

où $\delta_0$ représente un angle verrouillé en phase relatif du système d'énergie renouvelable connecté au réseau dans un état de fonctionnement nominal ;

en réponse au fait que la contrainte de surtension du système d'énergie renouvelable connecté au réseau est dominée par l'amplitude $U_s$ de la tension de bus CA, le calcul de la limite de sécurité $\delta_{DOC1}$ de l'angle verrouillé en phase relatif du système d'énergie renouvelable connecté au réseau sous la contrainte de surtension de celui-ci avec :

$$\delta_{DOC1} = -\arccos\left\{\frac{1-U_{sN}^2}{2}\left(\frac{U_g}{\omega_{pll}L_\Sigma} + \frac{\omega_{pll}L_\Sigma}{U_g}\right) + U_{sN}^2\sin\delta_0\right\} \quad (6) ;$$

et

en réponse au fait que la contrainte de surtension du système d'énergie renouvelable connecté au réseau est dominée par l'amplitude $U_r$ de la tension côté générateur du générateur d'énergie renouvelable (201) et l'amplitude $U_s$ de la tension de bus CA, la détermination de la limite de sécurité $\delta_{DOC1}$ de l'angle verrouillé en phase relatif du système d'énergie renouvelable connecté au réseau sous les contraintes de l'amplitude $U_r$ de la tension côté générateur et de l'amplitude $U_s$ de la tension de bus CA avec : la limite de sécurité de l'angle verrouillé en phase relatif du système d'énergie renouvelable connecté au réseau sous la contrainte de l'amplitude $U_r$ de la tension côté générateur déterminée selon la formule (5), ou la limite de sécurité de l'angle verrouillé en phase relatif du système d'énergie renouvelable connecté au réseau sous la contrainte de l'amplitude $U_s$ de la tension de bus CA déterminée selon la formule (6).

6. Procédé selon l'une quelconque des revendications 1 à 5, dans lequel la détermination (106), en fonction de la plage fonctionnelle synchrone du système d'énergie renouvelable connecté au réseau et de la limite de sécurité de l'angle verrouillé en phase relatif du système d'énergie renouvelable connecté au réseau sur la base de la contrainte de surtension, de la plage fonctionnelle de l'angle verrouillé en phase relatif du système d'énergie renouvelable connecté au réseau sur la base de la contrainte de surtension comprend :

la comparaison d'une valeur limite supérieure $\delta_{UEP1}$ et d'une valeur limite inférieure $\delta_{UEP2}$ de la plage fonctionnelle synchrone $[\delta_{UEP1}, \delta_{UEP2}]$ du système d'énergie renouvelable connecté au réseau avec la limite de sécurité $\delta_{DOC1}$ de l'angle verrouillé en phase relatif, respectivement ;
la détermination de la plage fonctionnelle de l'angle verrouillé en phase relatif du système d'énergie renouvelable connecté au réseau sur la base de la contrainte de surtension en tant que $[\delta_{DOC1}, \delta_{UEP2}]$, en réponse à $\delta_{UEP1} \leq \delta_{DOC1} \leq \delta_{UEP2}$ ; et
la détermination de la plage fonctionnelle de l'angle verrouillé en phase relatif du système d'énergie renouvelable connecté au réseau sur la base de la contrainte de surtension en tant que $[\delta_{UEP1}, \delta_{UEP2}]$, en réponse à $\delta_{DOC1} < \delta_{UEP1}$ ou à $\delta_{DOC1} < \delta_{UEP2}$.

7. Procédé selon l'une quelconque des revendications 1 à 6, dans lequel la génération (107), en fonction de l'angle verrouillé en phase relatif en temps réel et de la plage fonctionnelle de l'angle verrouillé en phase relatif, d'informations d'alerte rapide de la sécurité et de la stabilité synchrones du système d'énergie renouvelable connecté au réseau comprend :

le fait de déterminer que le système d'énergie renouvelable connecté au réseau se trouve dans un état de fonctionnement sûr et stable de manière synchrone, en réponse à $\delta_1 < \delta_{pll} < \delta_2$, dans lequel $\delta_1$ et $\delta_2$ représentent respectivement une valeur limite supérieure et une valeur limite inférieure de la plage fonctionnelle de l'angle verrouillé en phase relatif du système d'énergie renouvelable connecté au réseau ; et
le fait de déterminer que le système d'énergie renouvelable connecté au réseau ne se trouve pas dans l'état de fonctionnement sûr et stable de manière synchrone, en réponse à $\delta_{pll} < \delta_1$ ou à $\delta_2 < \delta_{pll}$.

8. Appareil pour la surveillance de la sécurité et de la stabilité synchrones d'un système d'énergie renouvelable connecté au réseau, le système d'énergie renouvelable connecté au réseau comprend un réseau électrique à courant alternatif, CA (202) et un générateur d'énergie renouvelable (201) connecté au réseau électrique CA (202) sur la base d'un convertisseur de source de tension, VSC, et configuré pour fonctionner de manière synchrone avec le réseau électrique CA (202) par le biais d'une boucle à verrouillage de phase, PLL, dans le VSC, l'appareil comprenant :

une partie d'acquisition de données (501) configurée pour acquérir, en réponse à une défaillance du système d'énergie renouvelable connecté au réseau, une tension côté générateur du générateur d'énergie renouvelable (201), une tension de bus CA, une tension du réseau électrique CA (202) et une entrée de courant dans le générateur d'énergie renouvelable (201) ;
une première partie de détermination (502) configurée pour déterminer, en fonction de la tension côté générateur, un angle verrouillé en phase relatif en temps réel du système d'énergie renouvelable connecté au réseau sur la base d'une logique de commande préétablie pour la PLL ;
une deuxième partie de détermination (503) configurée pour déterminer, en fonction de la tension du réseau électrique CA (202) et de l'entrée de courant dans le générateur d'énergie renouvelable (201), une plage fonctionnelle synchrone du système d'énergie renouvelable connecté au réseau sur la base d'une logique de commande préétablie pour la tension côté générateur du générateur d'énergie renouvelable (201) ;
une partie de contrainte dominante (504) configurée pour déterminer une contrainte de surtension du système d'énergie renouvelable connecté au réseau en fonction de la tension côté générateur, d'une valeur fixe prédéfinie pour la protection contre les surtensions côté générateur, de la tension de bus CA et d'une valeur limite prédéfinie pour l'isolation contre les surtensions de bus CA ;
**caractérisé par :**

une troisième partie de détermination (505) configurée pour déterminer, en fonction de la contrainte de surtension et de la tension du réseau électrique CA (202), une limite de sécurité de l'angle verrouillé en phase relatif du système d'énergie renouvelable connecté au réseau sur la base de la contrainte de surtension ;
une quatrième partie de détermination (506) configurée pour déterminer, en fonction de la plage fonctionnelle synchrone du système d'énergie renouvelable connecté au réseau et de la limite de sécurité de l'angle verrouillé en phase relatif du système d'énergie renouvelable connecté au réseau sur la base de la contrainte de surtension, une plage fonctionnelle de l'angle verrouillé en phase relatif du système d'énergie renouvelable connecté au réseau sur la base de la contrainte de surtension ; et
une partie d'alerte rapide de sécurité (507) configurée pour générer, en fonction de l'angle verrouillé en phase relatif en temps réel et de la plage fonctionnelle de l'angle verrouillé en phase relatif, des informations d'alerte rapide concernant la sécurité et la stabilité synchrones du système d'énergie renouvelable connecté au réseau.

**9.** Appareil selon la revendication 1, dans lequel la première partie de détermination (502) est en outre configurée pour :

introduire la tension côté générateur dans la logique de commande préétablie pour la PLL, pour calculer un angle verrouillé en phase du système d'énergie renouvelable connecté au réseau, dans lequel la logique de commande pour la PLL est exprimée comme suit :

$$\begin{cases} \overline{\theta}_{\text{pll}} = k_{\text{p\_pll}} \, \overline{x}_{\text{pll}} + k_{\text{i\_pll}} x_{\text{pll}} \\ \overline{x}_{\text{pll}} = u_{\text{r}}^{\text{q}} \end{cases} \qquad (1),$$

où $u_{\text{r}}$ représente la tension côté générateur du générateur d'énergie renouvelable (201), $u_{\text{r}}^{\text{q}}$ représente une composante de l'axe q de la tension côté générateur du générateur d'énergie renouvelable (201), $\theta_{\text{pll}}$ représente l'angle verrouillé en phase du système d'énergie renouvelable connecté au réseau, $\theta_{\text{pll}}$ représente une dérivée première de l'angle verrouillé en phase calculé, $k_{\text{p\_pll}}$ et $k_{\text{i\_pll}}$ représentent des paramètres de commande proportionnelle intégrale, PID, de la PLL, $x_{\text{pll}}$ représente une variable intermédiaire introduite, et $x_{\text{pll}}$ représente une dérivée première de la variable intermédiaire calculée ; et
introduire l'angle verrouillé en phase du système d'énergie renouvelable connecté au réseau dans une formule de calcul de l'angle verrouillé en phase relatif en temps réel, pour déterminer l'angle verrouillé en phase relatif en temps réel du système d'énergie renouvelable connecté au réseau, dans lequel la formule de calcul de l'angle verrouillé en phase relatif en temps réel est exprimée comme suit :

$$\delta_{\text{pll}} = \theta_{\text{pll}} - \omega_g t \ (2),$$

où $\delta_{\text{pll}}$ représente l'angle verrouillé en phase relatif en temps réel du système d'énergie renouvelable connecté au réseau, $\omega_g$ représente une fréquence angulaire d'une tension $u_g$ du réseau électrique CA (202), t représente une variable temporelle.

**10.** Appareil selon la revendication 8 ou 9, dans lequel la deuxième partie de détermination (503) est en outre configurée pour :

déterminer une formule de calcul d'un point d'équilibre stable sur la base de la logique de commande préétablie pour la tension côté générateur du générateur d'énergie renouvelable (201), dans lequel la logique de commande pour la tension côté générateur du générateur d'énergie renouvelable (201) est exprimée comme suit :

$$\begin{cases} u_r^d = u_g^d + i_c^q (\omega_{\text{pll}} L_\Sigma) \\ u_r^q = -u_g^q - i_c^d (\omega_{\text{pll}} L_\Sigma) \end{cases} (3),$$

où $i_c$ représente l'entrée de courant dans le générateur d'énergie renouvelable (201), $u_r$ et $u_g$ représentent respectivement la tension côté générateur du générateur d'énergie renouvelable (201) et la tension du réseau électrique CA (202), $u_r^d$ et $u_r^q$ représentent respectivement une composante de l'axe d et une composante de l'axe q de la tension côté générateur du générateur d'énergie renouvelable (201), $u_g^d$ et $u_g^q$ représentent respectivement une composante de l'axe d et une composante de l'axe q de la tension du réseau électrique CA (202), $i_c^d$ et $i_c^q$ représentent respectivement une composante de l'axe d et une composante de l'axe q de l'entrée de courant dans le générateur d'énergie renouvelable (201), $L_r$ et $L_g$ représentent respectivement une inductance de circuit et une inductance équivalente de Thevenin du réseau électrique CA (202), $L_\Sigma$ représente une inductance connectée au réseau et est exprimé en tant que $L_\Sigma = L_r + L_g$, et $\omega_{\text{pll}}$ représente une fréquence angulaire de la PLL ;

en réponse à $u_r^q = 0$ dans la formule (3), obtenir la formule de calcul du point d'équilibre stable, qui est exprimée comme suit :

$$-\omega_{\text{pll}} L_\Sigma i_c^d - U_g \sin \delta_{\text{pll}} = 0 \ (4),$$

où $U_g$ représente une amplitude de la tension du réseau électrique CA (202) ; et
déterminer, en résolvant la formule (4), la plage fonctionnelle synchrone du système d'énergie renouvelable connecté au réseau en tant que $[\delta_{\text{UEP1}}, \delta_{\text{UEP2}}]$,

$$\text{où } \delta_{\text{UEP1}} = -180° - \arcsin(\omega_p * L_\Sigma * i_c^d / U_g),$$

$$\delta_{\text{UEP2}} = 180° - \arcsin(\omega_p * L_\Sigma * i_c^d / U_g).$$

**11.** Appareil selon l'une quelconque des revendications 8 à 10, dans lequel la partie de contrainte dominante (504) est en outre configurée pour :

comparer une amplitude $U_r$ de la tension côté générateur avec la valeur fixe prédéfinie $U_{rN}$ pour la protection contre les surtensions côté générateur, et comparer une amplitude $U_s$ de la tension de bus CA avec la valeur limite prédéfinie $U_{sN}$ pour l'isolation contre les surtensions de bus,
dans lequel la contrainte de surtension du système d'énergie renouvelable connecté au réseau est déterminée comme étant dominée par l'amplitude $U_r$ de la tension côté générateur du générateur d'énergie renouvelable (201), en réponse au fait que seule l'amplitude $U_r$ de la tension côté générateur n'est pas inférieure à la valeur fixe

$U_{rN}$ pour la protection contre les surtensions côté générateur,

la contrainte de surtension du système d'énergie renouvelable connecté au réseau est déterminée comme étant dominée par l'amplitude $U_s$ de la tension de bus CA, en réponse au fait que seule l'amplitude $U_s$ de la tension de bus CA n'est pas inférieure à la valeur limite $U_{sN}$ pour l'isolation contre les surtensions de bus, et

la contrainte de surtension du système d'énergie renouvelable connecté au réseau est déterminée comme étant dominée par l'amplitude $U_r$ de la tension côté générateur du générateur d'énergie renouvelable (201) et l'amplitude $U_s$ de la tension de bus CA, en réponse au fait que l'amplitude $U_r$ de la tension côté générateur n'est pas inférieure à la valeur fixe $U_{rN}$ de la protection contre les surtensions côté générateur et que l'amplitude $U_s$ de la tension de bus CA n'est pas inférieure à la valeur limite $U_{sN}$ de l'isolation contre les surtensions de bus.

12. Appareil selon la revendication 11, dans lequel la troisième partie de détermination (505) est en outre configurée pour :

en réponse au fait que la contrainte de surtension du système d'énergie renouvelable connecté au réseau est dominée par l'amplitude $U_r$ de la tension côté générateur du générateur d'énergie renouvelable (201), calculer la limite de sécurité $\delta_{DOC1}$ de l'angle verrouillé en phase relatif du système d'énergie renouvelable connecté au réseau sous la contrainte de surtension de celui-ci avec :

$$\delta_{DOC1} = -\arccos\left\{ \frac{1-U_{rN}^2}{2}\left( \frac{U_g}{\omega_{pll}L_\Sigma} + \frac{\omega_{pll}L_\Sigma}{U_g} \right) + U_{rN}^2 \sin\delta_0 \right\} \quad (5),$$

où $\delta_0$ représente un angle verrouillé en phase relatif du système d'énergie renouvelable connecté au réseau dans un état de fonctionnement nominal ;

en réponse au fait que la contrainte de surtension du système d'énergie renouvelable connecté au réseau est dominée par l'amplitude $U_s$ de la tension de bus CA, calculer la limite de sécurité $\delta_{DOC1}$ de l'angle verrouillé en phase relatif du système d'énergie renouvelable connecté au réseau sous la contrainte de surtension de celui-ci avec :

$$\delta_{DOC1} = -\arccos\left\{ \frac{1-U_{sN}^2}{2}\left( \frac{U_g}{\omega_{pll}L_\Sigma} + \frac{\omega_{pll}L_\Sigma}{U_g} \right) + U_{sN}^2 \sin\delta_0 \right\} \quad (6) ;$$

et

en réponse au fait que la contrainte de surtension du système d'énergie renouvelable connecté au réseau est dominée par l'amplitude $U_r$ de la tension côté générateur du générateur d'énergie renouvelable (201) et l'amplitude $U_s$ de la tension de bus CA, déterminer la limite de sécurité $\delta_{DOC1}$ de l'angle verrouillé en phase relatif du système d'énergie renouvelable connecté au réseau sous les contraintes de l'amplitude $U_r$ de la tension côté générateur et de l'amplitude $U_s$ de la tension de bus CA avec : la limite de sécurité de l'angle verrouillé en phase relatif du système d'énergie renouvelable connecté au réseau sous la contrainte de l'amplitude $U_r$ de la tension côté générateur déterminée selon la formule (5), ou la limite de sécurité de l'angle verrouillé en phase relatif du système d'énergie renouvelable connecté au réseau sous la contrainte de l'amplitude $U_s$ de la tension de bus CA déterminée selon la formule (6).

13. Appareil selon l'une quelconque des revendications 8 à 12, dans lequel la quatrième partie de détermination (506) est en outre configurée pour :

comparer une valeur limite supérieure $\delta_{UEP1}$ et une valeur limite inférieure $\delta_{UEP2}$ de la plage fonctionnelle synchrone $[\delta_{UEP1}, \delta_{UEP2}]$ du système d'énergie renouvelable connecté au réseau avec la limite de sécurité $\delta_{DOC1}$ de l'angle verrouillé en phase relatif, respectivement ;

déterminer la plage fonctionnelle de l'angle verrouillé en phase relatif du système d'énergie renouvelable connecté au réseau sur la base de la contrainte de surtension en tant que $[\delta_{DOC1}, \delta_{UEP2}]$, en réponse à $\delta_{UEP1} \leq \delta_{DOC1} \leq \delta_{UEP2}$ ; et

déterminer la plage fonctionnelle de l'angle verrouillé en phase relatif du système d'énergie renouvelable connecté au réseau sur la base de la contrainte de surtension en tant que $[\delta_{UEP1}, \delta_{UEP2}]$, en réponse à $\delta_{DOC1} < \delta_{UEP1}$ ou à $\delta_{DOC1} < \delta_{UEP2}$.

14. Appareil selon l'une quelconque des revendications 8 à 13, dans lequel la partie d'alerte rapide de sécurité (507) est en outre configurée pour :

déterminer que le système d'énergie renouvelable connecté au réseau se trouve dans un état de fonctionnement sûr et stable de manière synchrone, en réponse à $\delta_1 < \delta_{pll} < \delta_2$, dans lequel $\delta_1$ et $\delta_2$ représentent respectivement une valeur limite supérieure et une valeur limite inférieure de la plage fonctionnelle de l'angle verrouillé en phase relatif du système d'énergie renouvelable connecté au réseau ; et

déterminer que le système d'énergie renouvelable connecté au réseau ne se trouve pas dans l'état de fonctionnement sûr et stable de manière synchrone, en réponse à $\delta_{pll} < \delta_1$ ou à $\delta_2 < \delta_{pll}$.

15. Support de stockage lisible par ordinateur, **caractérisé en ce que** le support de stockage lisible par ordinateur stocke un programme informatique configuré pour exécuter le procédé pour la surveillance de la sécurité et de la stabilité synchrones d'un système d'énergie renouvelable connecté au réseau selon l'une quelconque des revendications 1 à 7.

~101

A generator-side voltage of the renewable energy power generator, an AC bus voltage, a voltage of the AC power grid and a current input to the renewable energy power generator are acquired in response to failure of the renewable energy grid-connected system

~102

According to the generator-side voltage, a real-time relative phase-locked angle of the renewable energy grid-connected system is determined based on a pre-established control logic for the PLL

~103

According to the voltage of the AC power grid and the current input to the renewable energy power generator, a synchronous operable range of the renewable energy grid-connected system is determined based on a pre-established control logic for the generator-side voltage of the renewable energy power generator

~104

An overvoltage constraint of the renewable energy grid-connected system is determined according to the generator-side voltage, a preset fixed value for generator-side overvoltage protection, the AC bus voltage and a preset limit value for AC bus overvoltage insulation

~105

A safety boundary of a relative phase-locked angle of the renewable energy grid-connected system based on the overvoltage constraint is determined according to the overvoltage constraint and the voltage of the AC power grid

~106

An operable range of the relative phase-locked angle of the renewable energy grid-connected system based on the overvoltage constraint is determined according to the synchronous operable range of the renewable energy grid-connected system and the safety boundary of the relative phase-locked angle of the renewable energy grid-connected system based on the overvoltage constraint

~107

Early-warning information of the synchronous safety and stability of the renewable energy grid-connected system is generated according to the real-time relative phase-locked angle and the operable range of the relative phase-locked angle

## FIG. 1

**FIG. 2**

**FIG. 3**

**FIG. 4**

| Data acquisition part | ─501 |
| First determination part | ─502 |
| Second determination part | ─503 |
| Dominant constraint part | ─504 |
| Third determination part | ─505 |
| Fourth determination part | ─506 |
| Safety early-warning part | ─507 |

**FIG. 5**

601

Processor

Input equipment | Memory | Output equipment

603 | 602 | 604

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113552430 A